# EUROPEAN PATENT APPLICATION

(11) **EP 0 973 305 A1**
(43) Date of publication of application: **19.01.2000**
(21) Application number: 98911091.1
(22) Date of filing: 30.03.1998
(51) Int. Cl.: H04L 25/02, H04M 11/00, H01L 27/12

(54) **MODEM USING CAPACITIVE INSULATING BARRIER, INSULATING COUPLER, AND INTEGRATED CIRCUIT USED IN THE MODEM**

(30) Priority: 31.03.1997 JP 7955197
(71) Applicant: Hitachi, Ltd., Chiyoda-ku, Tokyo 101-8010 (JP)
(72) Inventor: KOJIMA, Yasuyuki Hitachi, Ltd. Hitachi-kenkyujo, Ibaraki 319-1221 (JP); OOUCHI, Takayuki Hitachi, Ltd. Hitachi-kenkyujo, Ibaraki 319-122 (JP); AKIYAMA, Noboru Hitachi, Ltd. Hitachi-kenkyujo, Ibaraki 319-1221 (JP); IWAMURA, Masahiro Hitachi, Ltd. Hitachi-kenkyujo, Ibaraki 319-1221 (JP); WATANABE, Atsuo Hitachi, Ltd. Hitachi-kenkyujo, Ibaraki 319-1221 (JP); NEMOTO, Minehiro Hitachi, Ltd. Hitachi-kenkyujo, Ibaraki 319-1221 (JP); YUKUTAKE, Seigou Hitachi, Ltd. Hitachi-kenkyujo, Ibaraki 319-1221 (JP); KANEKAWA, Nobuyasu Hitachi, Ltd. Hitachi-kenkyujo, Ibaraki 319-1221 (JP)
(74) Representative: Calderbank, Thomas Roger
(86) International application number: JP9801431
(87) International publication number: WO9844687

(57) **Abstract**

When an insulating coupler having a capacitive insulating barrier is formed on an SOI substrate and the timings of the DSP, AFE, and insulating coupler are synchronized using the DSP operation clock, the line interface circuit is made monolithic. By doing this, a miniature and economical modem device can be realized.

## Description

### FIELD OF THE INVENTION

The present invention relates to a modem device and system using a semiconductor device, a capacitor formed on the semiconductor device, particularly an insulating barrier which is a highly dielectric capacitor which will not break the device even if a high voltage is applied and will not supply a dangerous voltage to the secondary side, an insulating coupler, or an isolator, or an insulating amplifier transferring an electric signal using the insulating barrier (hereinafter referred to as an insulating coupler), an application circuit using the insulating coupler, particularly a line interface circuit for the modem device and others, and an IC thereof.

### PRIOR ART

To protect extremely public network facilities and protect terminals, the communication field requires a high insulation quality for boundaries (hereinafter referred to as line interfaces) between networks and terminals and miniature communication transformers having a high insulation quality have been used. However, as personal terminals have come into wide use and expanded recently, more miniature and light terminals are required as portable terminals, and a problem arises that the need for miniaturization is not sufficiently filled by improvement of the material and structure to be used for a transformer, and an application of the insulating coupler has been examined.

In uses such as measurement and medical treatment, there is a case that it is necessary to insulate between the signal detection unit and the signal processing unit such as a sensor and a signal processing circuit and the insulating coupler is known as an insulation separation means in such a case.

In such a case, although the signal voltage is about 100 mV, since a case that the commercial power supply comes in contact is assumed, there is a case that 100 V or a higher voltage is applied as a common mode noise voltage. In these respects, the insulating coupler and line interface have a common problem from the viewpoint of high dielectric strength, miniaturization, and low cost.

The insulating coupler is also the function itself of an insulating transformer, though there is a problem imposed that noise is mixed during transfer of a signal. For example, when a large common mode noise voltage is applied from the commercial power supply, a small signal transmission transformer may not transmit a signal and a transformer type insulating coupler using a dedicated pulse transformer is used. The insulating coupler using an insulating transformer is generally large in the mounting configuration and apt to be expensive.

To improve it, an insulation amplifier using a photo coupler combining a light emitting device and a photo detector has been designed. However, the photo coupler type insulation amplifier easily changes the characteristics due to temperature and to make it highly precise, improvements of the number and arrangement of light emission and detection diodes and circuits have been proposed but they are expensive. Users request further miniaturization. However, if it is attempted to particularly realize a monolithic semiconductor, a semiconductor process of another material for light emission and detection is required in addition to the silicon semiconductor process, and by use of several kinds of manufacture processes, it is expected that such a monolithic semiconductor will be remarkably expensive, and it cannot be practically realized.

For the purpose of miniaturization, high reliability, and low cost, capacitive insulating couplers have been developed. As a highly dielectric capacitor art as an individual part constituting an insulating barrier, a ceramic capacitor for power or surge protection is known and a circuit block for signal transmission using it is called a capacitive insulating amplifier or capacitive insulating coupler and has been used since 1970s.

As a transmission system for transmitting a signal via a capacitive insulating barrier, the PWM system (called the pulse width modulation system or duty control system) is mainly used. This PWM art is known as a constitution art of an insulating barrier using an insulating transformer or photo coupler before it is used for this capacitive insulating coupler.

In the capacitive insulating coupler, furthermore, for the purpose of miniaturization, low cost, and high reliability, an insulating amplifier of a duty cycle modulation system is proposed using an insulating barrier which is a capacitor with a small capacity formed on a ceramic substrate and a floating comparator. For further miniaturization, a proposal of reducing the capacity is made and an art of an insulating amplifier for changing a transfer waveform to a differential waveform using a small insulating barrier such as about 1 to 3 pF, reproducing an FM (frequency modulation) or PWM waveform from the differential waveform, and then demodulating is proposed.

With respect to application of a line interface of a modem and others, in USP 4757528, "Thermally coupled Information transmission across electrical Isolation boundaries" (hereinafter referred to as Patent 528) and ISSCC86 conference record THPM14.3 (hereinafter referred to as Announcement), Scott L. Falater (Harris Semiconductor) et al. disclose an idea of realization of a monolithic semiconductor using a capacitive insulating barrier.

Although it is not monolithic, three capacitive insulating barriers and a modem application circuit system of digital PWM signal transmission using them are proposed in Japanese Patent Application Laid-Open 7-307708.

For these circuits, a request of further miniaturization and lower cost will be presented in the future and when these prior arts are examined from this point of view, the following subjects and problems arise.

According to the art before Patent 528, an insulating barrier having highly dielectric performance, an input circuit receiving an input signal and generating a PWM waveform, and an output circuit reproducing and demodulating a PWM waveform are different parts and these parts are assembled and mounted so as to constitute one insulating coupler. For example, a capacitive insulating barrier is structured on a ceramic substrate and at least two semiconductor chips are mounted on the same package so as to constitute an insulating coupler. Namely, a constitution using many parts is provided.

In Patent 529 and Announcement, it is indicated that as an idea that a line interface which is an application circuit comprises a monolithic semiconductor, a capacitive insulating barrier and the PWM transmission system are used by the circuit schematic diagram which is a principle and explanation. The manufacturing method is that an insulating coupler comprising a capacitive insulating barrier using the DI (dielectric separation) process and a PWM circuit is formed on a monolithic semiconductor and a sound band signal is transmitted by combining this insulating coupler. However, the disclosed art is an art regarding control of an insulating switch by a thermal pulse and it is not disclosed that an insulating barrier and circuit of what a kind of structure are structured on a monolithic semiconductor substrate by what a kind of method and as a result, how the structure operates and what an affect the structure produces.

Furthermore, in Japanese Patent Application Laid-Open 7-307708, although two insulating barriers are conventionally used for one transmission path, a circuit constitution for transmitting three signals by three capacitive insulating barriers is indicated but how the circuits operate so as to transmit signals is not indicated. Needless to say, a proposal for making these circuits including the insulating barriers monolithic is not made.

Users request to make the modem circuit and insulating barriers smaller and cheaper and for that purpose, it is considered to be essential to realize a monolithic semiconductor. However, the aforementioned prior arts do not disclose arts on how capacitive insulating barriers, circuits for using capacitive insulating barriers, arrangement of them, and an insulating method between arranged circuits are structured on a semiconductor substrate and how they are operated so as to realize a monolithic IC insulating coupler, a monolithic IC application circuit, and a monolithic IC line interface circuit. Therefore, how the dielectric strength is realized so as to produce a monolithic IC and characteristics of the highly dielectric capacity formed on the semiconductor are not known at all.

When a plurality of insulating couplers are simultaneously operated in parallel, noise is generally generated stationarily by the operation of a certain insulating coupler, and crosstalk is generated in the other insulating couplers by the generated noise, and the transmission characteristic of the insulating couplers is affected, and the S/N of a signal to be transmitted via the insulating barriers is degraded by it. Particularly, when the signal level is low like model application and the amplitude of a signal is greatly different between rising and falling, even small crosstalk comes into question. However, there are no prior arts responding to these problems.

### DISCLOSURE OF THE INVENTION

An object of the present invention is to realize a compact and economical line interface circuit having a built-in insulating means necessary between a line and a terminal and a modem device and to realize a monolithic insulating barrier necessary for it, a monolithic insulating coupler using the insulating barrier, an application circuit IC using it, and particularly a line interface circuit IC.

Another object of the present invention is to provide an art for structuring a capacitive insulating barrier on a semiconductor substrate.

Still another object of the present invention is to provide an art for structuring an insulating coupler using a capacitive insulating barrier on a semiconductor substrate.

A further object of the present invention is to provide a structure, arrangement, and operation method of an application circuit using a plurality of insulating couplers on a semiconductor substrate, particularly a line interface and furthermore to provide an art for reducing degradation of a signal due to a timing hazard and crosstalk such as a timing synchronization method between the insulating couplers.

A still further object of the present invention is to realize a low leakage current when a line is not used for communication in a line interface comprising an insulating coupler.

A still further object of the present invention is to provide a breakdown dielectric strength improvement art for a surge voltage of an insulating coupler.

A still further object of the present invention is to make a modem device and a system smaller and more economical using an insulating coupler.

The present invention uses the following means so as to solve the conventional problem of a large size and a high price.
(1) On the surface of a semiconductor wafer (SOI wafer) having a buried insulating layer as an inner layer, an insulating band reaching the insulating layer (hereinafter referred to as an insulating band) is formed and an insulating barrier is formed between the side walls of the insulating band.
(2) A plurality of circuit areas enclosed by an insulating barrier and an insulating band are formed, and the circuit areas are insulated from each other, and a monolithic insulating coupler is formed.
(3) In the insulating coupler, at least amplification means for a capacitor output signal such as an amplifier and comparator are provided in the circuit receiving capacitor output.
(4) In the line interface circuit of a modem device and others, a plurality of monolithic insulating couplers, a line side circuit, and a terminal side circuit are provided.
(5) The configuration of IC integration is as follows:
   1) a line side circuit including a highly dielectric device,
   2) a terminal side circuit including the AFE (analog front end) which is a lowly dielectric device, and
   3) all units are integrated.
   These are supported by the monolithic insulating coupler.
(6) On the low voltage side, there is particularly a configuration that a plurality of monolithic insulating couplers are built in the AFE.
(7) The line interface circuit is structured using a monolithic AFE integrated circuit (I-AFE) and the modem circuit is realized.
(8) To connect and operate the modem circuit comprising a DSP (digital signal processor) and I-AFE, the DSP, I-AFE, and these insulating couplers are synchronized in timing using the operation clock of the DSP.

By doing this, it is possible to realize highly dielectric strength by the insulating layer and insulating barrier and to correct a reduction in the signal amplitude due to the stray capacitor by the amplification means, or reduce the degradation of a signal due to crosstalk by synchronizing the operation timing, and realize a compact insulating coupler of high performance and a modem interface circuit.

The present invention will be explained slightly concretely hereunder.

According to the present invention, a semiconductor IC is formed by processing a semiconductor wafer having a buried insulating layer as an inner layer, forming an insulating barrier, an insulating coupler, an application circuit of the insulating coupler, and particularly a line interface circuit, overlapping the insulating layer and wiring layer as required, and furthermore forming a protective layer serving as insulation. Each circuit is insulated by enclosing by the insulating layer, insulating band, and insulating protective layer. The insulating band is, for example, a band-shaped insulating pattern with a width of about 1 to 3 microns reaching the insulating layer from the surface of the semiconductor layer (the thickness is equal to the thickness of the semiconductor layer, for example, 10 to 50 microns) and the insulating band is formed by the trench method for forming a groove of the predetermined pattern reaching the inner insulating layer from the surface of the semiconductor and burying it in an insulator or the ion implantation method for implanting oxygen ions in the semiconductor layer and creating an insulating area. Hereinafter, a portion enclosed by the insulating band is referred to as an electrode area or a circuit area with "area" added.

In application of the line interface of the insulating coupler of the present invention, it is necessary to build in a plurality of insulating couplers. In this case, to connect a monolithic line interface IC in which a plurality of capacitive insulating couplers, a line side circuit, and a terminal side circuit are provided to a modem circuit comprising a DSP and an AFE and operate it, the timing is synchronized between the DSP, AFE, and the operation clock of these insulating couplers. The carrier clock of the insulating coupler for receiving a modem signal is reproduced and used from the clock of the DC loop control signal transfer coupler. The DC loop control drives the CMOS switch by the charge pump circuit using the insulating barrier and loops the direct current.

The insulating barrier in the insulating coupler of the present invention structures a capacitor by forming electrode areas by enclosing by the insulating band and arranging so that a plurality of electrode areas share a part of the insulating band or so that the common length is sufficiently long to obtain a necessary capacity. By setting the shape and arrangement of the insulating band so that three or more electrode areas share two or more insulating areas, that is, by the multi-trench, it is possible to form capacitors connected in series. The buried insulating layer has a thickness such that the insulating performance corresponding to the width of the insulating band is provided.

The insulating coupler of the present invention is realized by forming the insulating barrier, input circuit, and output circuit on the same wafer. Each circuit is enclosed by an insulating band and insulated from the other parts. The insulating barrier is arranged on the boundary between the input circuit area and the output circuit area in principle. These circuit areas and the insulating barrier are ganged together and further enclosed by an insulating band. In the input circuit and output circuit, a PWM modulator and PWM demodulator or another circuit depending on the purpose, for example, a circuit digitized not only in the amplitude direction but also in the time base direction such as a ΣΔ modulator and demodulator for a signal in the voice frequency band are included respectively. Between the insulating barrier, input circuit, and output circuit, a protective circuit comprising a non-linear device such as a diode is arranged respectively. The protective circuit is arranged within the circuit area.

The application circuit of the present invention is realized by further arranging an application circuit area enclosed by an insulating band in the insulating coupler. When a plurality of said insulating couplers are included, the insulating barrier may be arranged along the insulating barrier arrangement line. To operate a plurality of insulating couplers, the transfer block is synchronized as required. In application of the insulating couplers to the line interface circuit, it is particularly possible to further divide the CMOS circuit area into the PMOS group to be connected to the power cable and the NMOS group to be connected to the grounding cable and separate them by an insulating band so that the CMOS circuit is included in the circuit area. The power cables are laid out between a plurality of insulating couplers. The neighborhood of each insulating coupler may be enclosed by a power cable and grounding cable. For example, with respect to the CMOS circuit, there is an advantage that voltage control requiring no control current and a high off-state resistance are obtained. On the other hand, a through phenomenon of the PMOS and NMOS including the parasitic transistor, that is, latch-up is easily generated. However, there is an advantage that by separating the area as mentioned above, such a phenomenon is hardly generated.

Highly dielectric strength in the thickness direction is realized by use of an insulating inner layer wafer, and a very miniature insulating barrier is realized by forming two electrode areas having a shared insulating band on the same wafer, and a very miniature insulating coupler can be realized by forming the insulating barrier and two circuit areas of an input circuit and an output circuit on the same wafer. Furthermore, by overlapping electrode areas, connecting the capacities in series, and realizing highly dielectric strength in the horizontal direction, more highly dielectric strength can be realized even if the width of one insulating band cannot be spread due to restrictions on the process. Furthermore, by floating the intermediate electrode during arrangement of the series capacities, extended cables in the strongly energized electric field can be reduced.

In the case of application using a plurality of insulating couplers, by arranging the capacitive insulating barriers such as electrodes and insulating bands, the insulating performance can be homogenized.

In the case of application of the line interface, by synchronizing the transfer clocks of a plurality of insulating couplers, the PWM crosstalk to a transmission signal can be minimized. By using the CMOS circuit system as a circuit system, the DC loop control circuit which is a line connection switch can be controlled in voltage using the charge pump. The CMOS circuit system realizes high impedance of the switch when it is off and realizes a low leakage current. By installing a protective circuit at each terminal of the insulating barriers in the same way as with an external connection terminal, destruction of the device due to surge noise can be prevented.

### BRIEF DESCRIPTION OF THE DRAWINGS

Fig. 1 is a circuit block diagram of a modem device of the first embodiment of the present invention.
Fig. 2 is an operation timing chart of the modem device shown in Fig. 1.
Fig. 3 is a circuit block diagram of the insulating coupler shown in Fig. 1.
Fig. 4 is an operation timing chart of the insulating coupler shown in Fig. 3.
Fig. 5 shows synchronization of a modem signal process and an insulating coupler timing chart.
Fig. 6 is a timing chart showing an effect of timing synchronization.
Fig. 7 is a layout of the IC of the line interface circuit in the circuit shown in Fig. 1.
Fig. 8 is a structural diagram of the insulating coupler in the IC shown in Fig. 7.
Fig. 9 is a structural diagram of the insulating barrier in the IC shown in Fig. 7.
Fig. 10 is a deformation example of a layout of a line interface IC.
Fig. 11 is a circuit block diagram of the insulating coupler system applied to the present invention.
Fig. 12 is a circuit block diagram of a modem device of another embodiment of the present invention.
Fig. 13 is a timing chart showing an effect of another embodiment of a modem.
Fig. 14 is a structural diagram of another embodiment of an IC of a line interface circuit.
Fig. 15 is a structural diagram of another embodiment of the insulating barrier of the present invention.
Fig. 16 is a structural diagram of an embodiment of the insulting coupler of the present invention.
Fig. 17 is a structural diagram of another embodiment of the insulting coupler of the present invention.
Fig. 18 is a structural diagram of still another embodiment of the insulting coupler of the present invention.
Fig. 19 is a structural diagram of a modem device using the line interface IC of the present invention.
Fig. 20 is a circuit block diagram of an embodiment of a line interface circuit containing the monolithic insulating coupler of the present invention.
Fig. 21 is a layout conception diagram of the IC (I-AFE) of the line interface circuit shown in Fig. 20.
Fig. 22 is an embodiment of a modem circuit using the IC (I-AFE) shown in Fig. 21.
Fig. 23 is an embodiment of a modem device using the IC (I-AFE) shown in Fig. 21.
Fig. 24 is an embodiment of another communication device using the monolithic insulating coupler of the present invention.
Fig. 25 is an embodiment of another layout of the monolithic insulating coupler of the present invention.
Fig. 26 is a circuit block diagram of another embodiment of the monolithic insulating coupler of the present invention.
Fig. 27 is a detailed circuit diagram of Fig. 26.
Fig. 28 is an operation timing chart of the detailed circuit diagram of Fig. 27.
Fig. 29 is a circuit block diagram of an embodiment that a plurality of insulating couplers are loaded on the same SOI substrate.

### DESCRIPTION OF PREFERRED EMBODIMENTS

The present invention will be explained hereunder according to the embodiments.

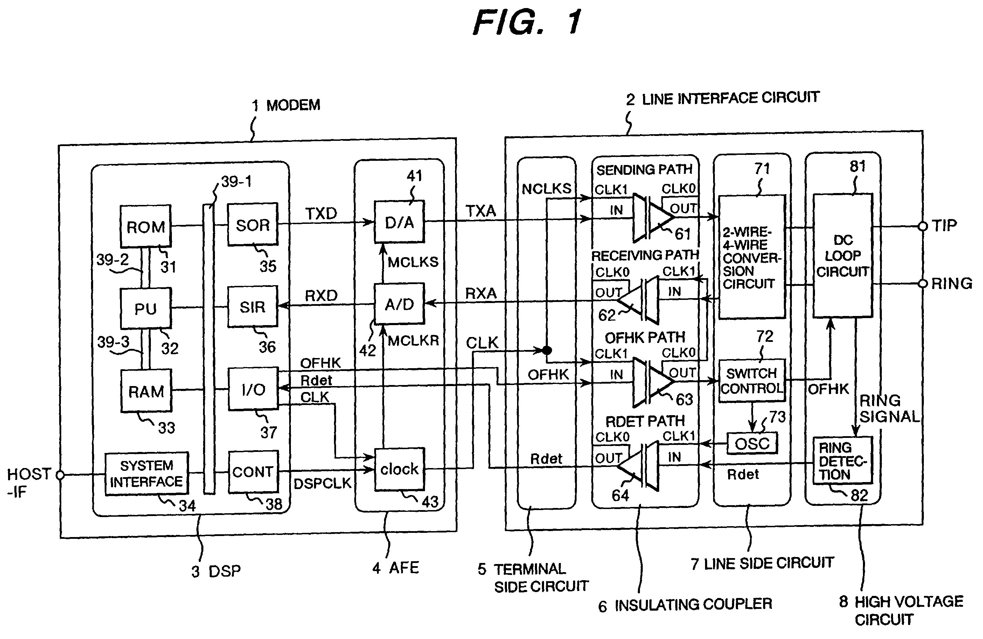

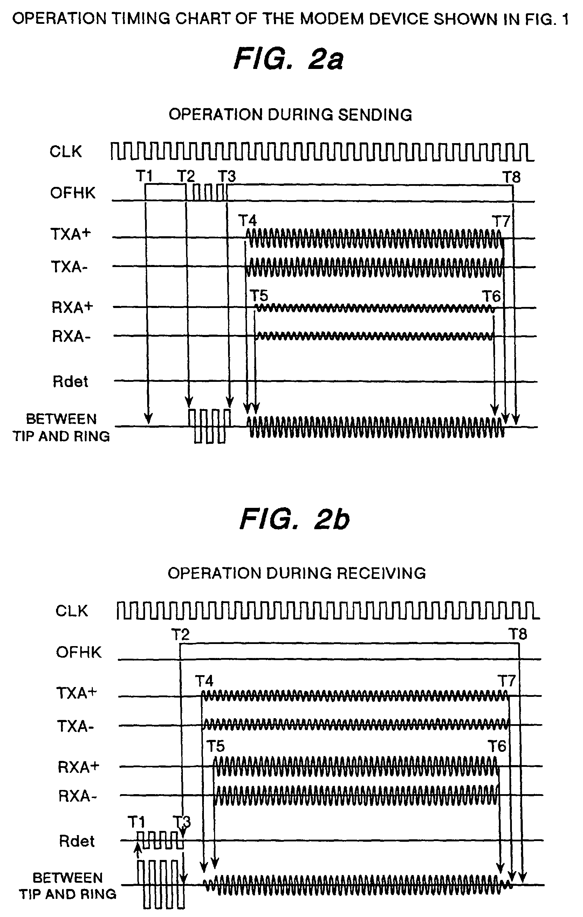

The modem device of the first embodiment of the present invention will be explained with reference to Figs. 1 to 9.

Fig. 1 is a circuit block diagram of the modem device of the first embodiment of the present invention. In Fig. 1, numeral 1 indicates a modem and 2 indicates a line interface circuit. The modem circuit 1 comprises a DSP (digital signal processor: a dedicated processor for processing a digital signal) 3 and an AFE (analog front end) 4 and the line interface circuit 2 comprises a terminal side circuit 5, an insulating coupler 6, a circuit side circuit 7, and a high voltage circuit 8. The roles of the DSP 3 and the AFE 4 in the modem 1 are that the DSP 3 processes a digital signal and the AFE 4 serves as an interface with the digital circuit and analog circuit. Namely, the DSP 3 sends or receives digital information to or from a terminal and also performs processes such as modulation, demodulation, coding, decoding, and filter processing by the digital signal processing and sends or receives a digital signal to or from the AFE 4. The AFE 4 performs AD (analog to digital) conversion, DA (digital to analog) conversion, and filtering. The line interface circuit 2 may be referred to as a DAA (direct access arrangement) and has a function for directly connecting an analog signal of the modem to the telephone line and simultaneously sending or receiving a signal such as line connection, sending of a dial signal, or detection of a terminating signal to or from the switchboard corresponding to the modem by the line side circuit 7 and the high voltage circuit 8. However, an interface function for safety between the switchboard and a terminal is necessary and the insulating coupler 6 serves as a boundary for this safety.

The DSP 3 contains a ROM (read only memory: a dedicated memory for reading) 31, a PU (processing unit: a unit for performing arithmetic) 32, a RAM (random access memory: a memory for reading and writing) 33, a system interface 34, a SOR (serial output interface) 35, a SIR (serial input interface) 36, I/O (input and output interface) 37, and CONT (controller in the DSP) 38 and they are connected by three buses 39-1, 39-2, and 39-3. The DSP 3 is controlled by the software in the DSP system control circuit CONT 38, operates at about 40 MHz, operates by an instruction from a terminal device via HOST-IF, and receives data. A normal modem has a concurrent communication capability of sending and receiving. Upon receipt from HOST-IF, sent data is stored in the RAM 33 once, subjected to signal conversion, coding, and filtering using the data in the ROM 31 and the already stored sending signal, and outputted via the SOR 35. After an AD signal is received from the SIR 36, the received signal performs various filtering processes, judgment, and code conversion using the sending signal stored in the RAM, already received signal, and data in the ROM 31. The I/O 37 has a control signal I/O function for controlling an external circuit from the DSP 3.

The AFE 4 comprises a DA converter 41, an AD converter 42, and a clock divider 43 and mainly serves as an interface means for inputting and outputting a modem signal by the DSP 3 controlling the filtering and modulation and demodulation processes. The terminal side circuit 5 is a circuit for connecting data and the clock. The insulating coupler 6 comprises a sending path 61, a receiving path 62, an OFHK path 63, and an Rdet path 64 and details of the internal constitution and operation will be described later. The line side circuit 7 comprises a 2-wire - 4-wire conversion circuit 71, a switch control circuit 72, and an OSC (local originating circuit) 73 and the 2-wire - 4-wire conversion circuit 71 is a hybrid circuit means for suppressing 4 wires of sending signal paths and receiving paths and 2 wires on the line side so that a sending signal will not turn to the receiving side. The high voltage circuit 8 comprises a DC loop circuit 81 and a Ring (call signal) detection circuit 82 for detecting a call signal and the DC loop circuit 81 is a means for connecting to two terminals TIP and RING of line connection and generating a DC loop by the control signal OFHK path 63 and the switch control circuit 72.

The first structural characteristic of this modem circuit is that the circuits on the line side and terminal side are separated by the 4 insulating couplers 6. The power supplies are also separated rightfully and the power supply on the line side uses power supplied from the exchange and the terminal side uses the power supply at the terminal. The second characteristic is that the basic clock is supplied from the DSP 3. As shown by the thick arrow lines in the drawing, the timing signal obtains the AD conversion timing (MCLKS) and DA conversion timing (MCLKR) of the AFE in the modem and the data transmission timing of the modem 3 from the clock circuit 43 using the clock signal DSPCLK supplied from the CONT 38 of the modem 3, supplies them to the line interface circuit 2, and gives them to the sending path 61 of the insulating coupler 6 and the OFHK path 63 of the control signal sending insulating coupler. On the other hand, the receiving path 62 of a modem signal uses the reproduced clock of the OFHK path 63 and the Rdet path 64 of the control signal receiving insulating coupler is significant only when it receives the RING signal in the reception standby state, so that oscillation is controlled by the OFHK signal. By doing this, the paths other than the Rdet signal path synchronize with the operation timing of the DSP 3 in the modem 1. By doing this, the effect described later can be obtained.

Next, the operation of this circuit as a modem function will be explained by referring to Fig. 2. Fig. 2 shows an example of a timing chart which is divided into during sending (a) and during receiving (b). During sending, the DSP 3 controls the I/O 37 according to an instruction from a terminal first and turns the DC loop control signal OFHK off (T1). When the line (that is, the switchboard) responds to the DC looping (T2), the line interface circuit 2 sends a dial signal. This is executed by turning the OFHK terminal ON or OFF according to the line standard and turning the DC loop ON or OFF. For example, in Japan, it is 10 PPS (pulse per second) or 20 PPS. When the sending of the dial signal ends (T3), the terminal waits until the line is connected to the remote modem (T4), activates the modem 1, and starts sending. According to the activation instruction, the modem 1 generates sending signals TXA+ and TXA-via the SOR 35 of the DSP 3 and the DA converter 41 of the AFE 4 according to the predetermined procedure and starts up communication with the remote modem. The line interface circuit supplies the TXA signal to the 2-wire - 4-wire conversion circuit 71 via the sending path 61 of the insulating coupler 6. The 2-wire - 4-wire conversion circuit 71 reduces turning to the receiving side and sends the sending signal to the line from the TIP and RING terminals via the DC loop circuit 81. When the remote modem responds to this sending signal (T5), the signal of the remote modem can be seen on the line, and the receiving signal is selected by the 2-wire - 4-wire conversion circuit 71 via the reverse path, transferred to the modem 1 via the receiving path 62 of the insulating coupler 6, the AD converter 42 of the AFE, and the SIR 36 of the DSP 3, and amplified, filtered, and demodulated by the signal process of the DSP, and the digital data is restored and transferred to the host as received data. To stop the communication, the terminals send and receive their stop information by the protocol which is upper than that of the modem signal and then output a stop instruction to the respective modems (RS off) and each modem stops the signal in response to it (T6, T7). Then this communication ends (T8), OFHK is turned off. By doing this, a signal roughly like the one "between TIP and RING" shown in Fig. 2 appears between the line connection terminals TIP and RING in correspondence with each timing from T1 to T8.

During receiving, the modem is activated by the RING signal from the line side (T1) and when the line interface circuit detects it by the RING detection circuit 82, it immediately transfers it to the modem 3 via the Rdet path 64 of the insulating coupler 6. The modem 3 becomes aware of it through the I/O circuit 37 and when the modem 3 responds to it, it outputs the DC loop control signal OFHK in the same way as with during sending and loops the DC (T2). When the DC is looped, the switchboard of the office stops the RING signal (T3), so that the remote modem sends a modem signal after waiting for the decided time of the line (T4). Therefore, the modem 3 receives it as signals RXA+ and RXA- and when the receiving side modem recognizes it as a modem signal, it responds to it and starts sending (T5). Also when the communication is to be completed, it ends by almost the same sequence as that during sending such as T6, T7, and T8. During these receiving operations, the signal shown in the drawing (schematically indicated) appears on the line in correspondence with each timing from T1 to T8. This operation itself is generally as specified in the standard.

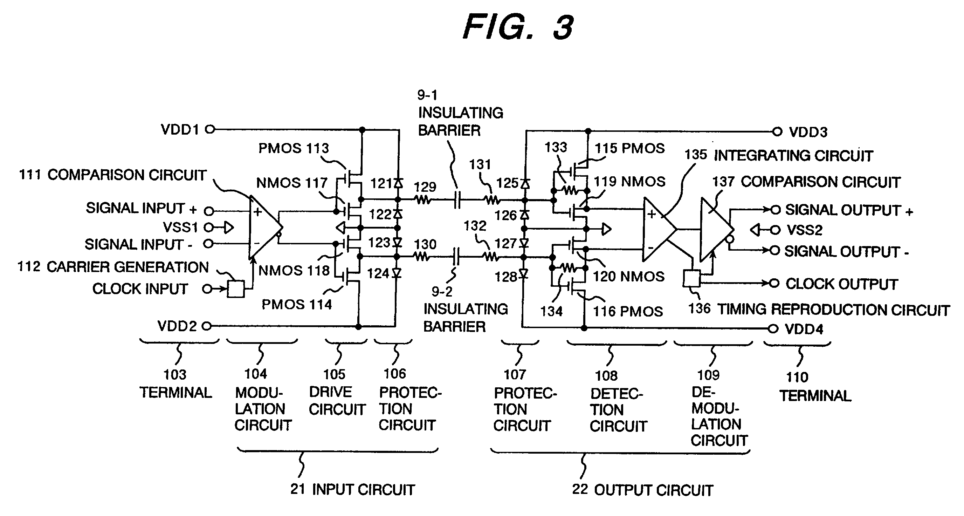

Fig. 3 is a circuit block diagram of one path of the insulating coupler 6 in the embodiment shown in Fig. 1. In Fig. 3, numerals 9-1 and 9-2 indicate capacitive insulating barriers which will be described later, 21 an input circuit, and 22 an output circuit and a safety boundary between the terminal of the modem and the switchboard is realized by the insulating barriers. The input circuit 21 inputs power and a signal from a terminal 103, comprises a modulation circuit 104, a drive circuit 105, and a protection circuit 106, converts and modulates an inputted analog signal, converts it to a PWM (pulse width modulation) signal, and outputs the signal to the output circuit 22 via the insulating barriers 9-1 and 9-2. The output circuit 22 comprises a protection circuit 107, a detection circuit 108, and a demodulation circuit 109, supplies power from a terminal 110, detects a signal sent from the insulating barriers 9 by the detection circuit 108, reproduces a PWM signal from the detected signal by an integration circuit 135 and a comparison circuit 137, and reproduces an analog signal corresponding to the input signal from the PWM signal. The output circuit 22 also has a function for extracting a timing signal from the detected signal and outputting these signals.

The terminal 103 on the input side includes power terminals VDD1 and VDD2, a grounding terminal VSS1, and a clock input terminal for differential input of + and - as signal input and modulation timing. The modulation circuit 104 comprises a comparison circuit 111 and a carrier generation circuit 112. The drive circuit 105 is an inverter driver comprising PMOS transistors 113 and 114 and NMOS transistors 117 and 118. The protection circuit 106 comprises diodes 121, 122, 123, and 124 and resistors 129 and 130 and prevents circuit breakdown due to approaching of a surge voltage from the side of the output circuit 22. The protection circuit 107 on the side of the output circuit 22 comprises resistors 131 and 132 and diodes 125, 126, 127, and 128 and protects the gates of the transistors of the detection circuit 108. PMOS transistors 115 and 116 and NMOS transistors 119 and 120 constitute a detection circuit of an inverter constitution having feedback resistors 133 and 134. The output of the detection circuit 108 is connected to the integration circuit 135. The integration circuit 135 reproduces a PWM waveform from an inverter output signal. Numeral 136 indicates a circuit for reproducing the timing of a carrier and 137 indicates a comparison circuit. The terminal 110 on the output circuit side supplies power from power terminals VDD3 and VDD4 and a grounding terminal VSS2 and outputs the signal outputs + and - of a complementary type of processing results and the timing clock. The characteristics of this constitution are (1) the two insulating barriers 9-1 and 9-2 are used, and (2) an external clock is inputted, and (3) a reproduced clock is outputted. Although not indicated because a normal I/O protection circuit is used, for the signal input + and - terminals and clock input terminal among the terminals 103 shown in this circuit block diagram, an input protection circuit is installed when they are to be independently used as an insulating coupler. In the explanation of this circuit constitution, a combination of PMOS and NMOS is indicated. However, depending on the purpose, the bipolar process or coexistence process may be used. Furthermore, for the purpose of independent use of the insulating coupler, a clock may be internally generated.

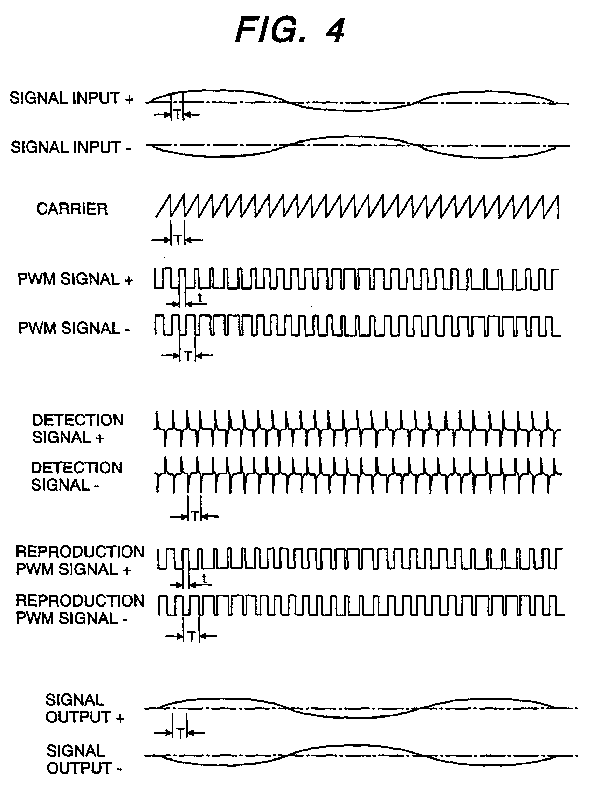

Next, the operation of the insulating coupler of this embodiment will be explained by referring to Fig. 4. Fig. 4 is an operation timing chart of the insulating coupler shown in Fig. 3 and the signal transmission system is the PWM (pulse width modulation) system. A carrier sufficiently higher (1.2288 MHz, 256 times or more in this case) than the frequency band (about 3.4 kHz max. in this case) of an input signal having a waveform to be transferred is used, and the time axis is divided for each fine period T, and an input signal at each time is transmitted by converting the magnitude thereof to each pulse width t. When an input signal is at 0 V, t/T=0.5, that is, the duty is 50% and the duty is converted so that as the input signal increases positively, the pulse width increases and as the input signal increases negatively, the pulse width decreases. To reduce the effect of common mode noise, an input signal is differentially inputted such as input signal + and input signal -. However, depending on the purpose, another input system may be used.

Fig. 4 schematically shows a sine wave when it is applied to the + and - input terminals. The rectangular clock inputted from outside the insulating coupler is converted to a saw tooth waveform by the carrier generation circuit 112 and used as a carrier. The modulation circuit 104 is the comparison circuit 111 and outputs the PWM + and PWM - waveforms in which the pulse duty is changed by receiving these input signals. The drive circuit 105 inputs the PWM + and PWM - waveforms to the drive circuit 105 and supplies them to the one-side terminals of the insulating barriers 9-1 and 9-2 via the protection circuit 106. The capacitor values of the insulating barriers 9-1 and 9-2 are about 1 pF. The protection circuit 106 is set at a constant such that it is effective in a high voltage surge waveform of several tens ns or less, so that it will hardly affect this drive waveform. The other electrodes of the insulating barriers 9-1 and 9-2 input to the detection circuit 108 via the protection circuit 107. This detection circuit 108 is the inverter and integration circuit 135. The inverter output has a differential waveform like those of the detection signals + and - and is extremely attenuated due to the stray capacity, so that it is amplified by the inverter once and inputted to the integration circuit 135. The integration circuit 135 is an integrator having two input terminals of + and - and inputs a signal in a differential waveform, so that it outputs reproduced PWM signals + and - as shown in the drawing. The timing reproduction circuit 136 is a PLL circuit and extracts the timing signal component from the reproduced PWM signal. When a saw tooth waveform is generated using the timing waveform and it is subjected to sample-holding at the timing of the reproduced PWM signal, a demodulated waveform like the output signals + and - can be reproduced.

The circuit operation of this insulating coupler is explained above. In execution of the present invention, as a PWM realization method, another method may be used. For example, the modulated waveform may be a triangular wave. When a triangular wave is used, the center timing of the modulated waveform becomes constant, so that for example, there is an effect that a high precision timing reproduction system like PLL can be used in the demodulation circuit. In the output circuit, a flip-flop of a set-reset type may be arranged in place of the integration circuit. The startup timing of a differential waveform which is an inverter output is the PWM timing information itself and by properly selecting the characteristics of the load resistor and inverter, it can be used as a flip-flop control signal as it is. The output of the flip-flop is the PWM waveform itself.

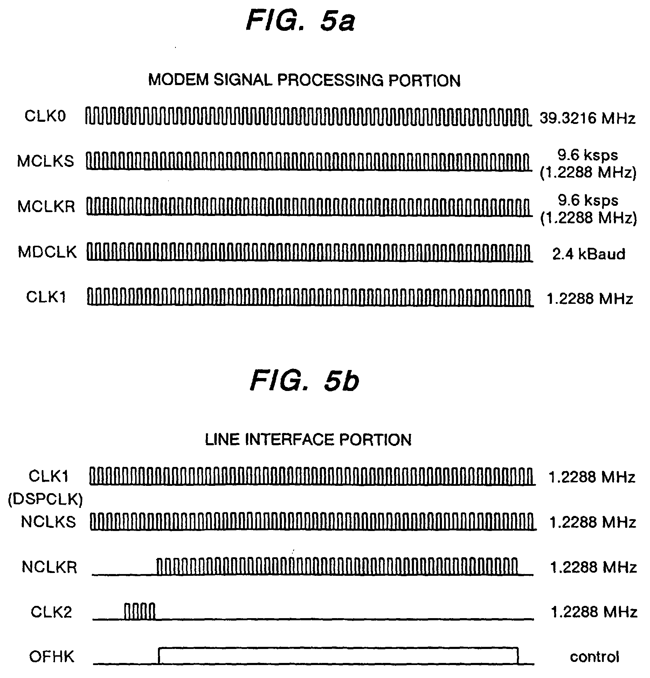

The characteristic of this operation timing is that the three control signals of sending signal, receiving signal, and line connection control signal are transferred in parallel. As a result, in a line interface using this insulating coupler, the crosstalk of a signal becomes noise and the SN ratio is degraded. Therefore, in this embodiment, the DSP operation timing, modem processing timing, and insulating coupler timing are synchronized and this degradation is suppressed. This will be explained by referring to Fig. 5.

Figs. 5(a) and 5(b) show the relationship between the modem signal process and the insulating coupler operation timing. The characteristic of the circuit constitution of this embodiment is that the operation timing of the line interface circuit is supplied from the modem and the circuit operation in the IC is synchronized with this clock. In Fig. 5, (a) shows the modem signal processing portion and although the timing chart is schematic, the relationship is shown on the right side of the chart. Namely, in the mode signal processing portion, the DSP operates at 39.3216 MHz, and 1.2288 MHz is supplied to the AFE and used as DA conversion timing MCLKS and AD conversion timing MCLKR. The DA conversion and AD conversion system is a 256-times over sample system, so that the substantial value is 9.6 ksps. (b) shows the clock timing relationship of the line interface portion and the clock signal DSPCLK supplied from the DSP is supplied to the sending signal path 61 of the insulating coupler 6 and the control signal path 63 as NCLKS and synchronized with the modem operation timing. It is desirable that the receiving signal path NCLKR operates only when the control signal is in the ON state, so that it has a gated waveform as shown in the drawing. Although the timing CLK2 of the Rdet path is locally generated in the line side circuit, it is stopped by the control signal OFHK during sending and receiving of a signal between the modems.

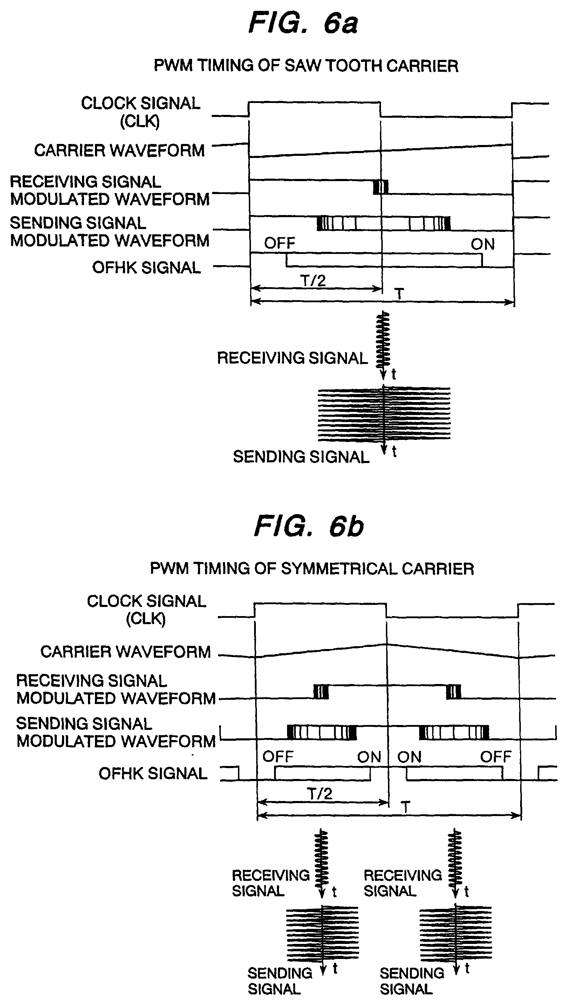

The effect obtained by synchronizing the operation timings of the DSP, AFE, and insulating coupler like this will be explained by referring to Fig. 6.

In Fig. 6, (a) shows the PWM modulation timing when the saw tooth waveform is used as a carrier. With respect to modulation, a saw tooth waveform changing to a carrier waveform by integrating a clock signal is generated and a PWM modulated waveform is obtained by comparing it with a transmitting signal. In the drawing, the receiving signal, sending signal, and OFHK control signal are shown. The receiving signal is affected by the transmission loss on the line as shown in RXA + and - in Fig. 1, so that the amplitude is small such as from -20 to -45 dBm or so. On the other hand, the sending signal is sent by itself, so that the amplitude is large, generally from -6 to -15 dBm or so. The control signal is at a logic level of 5 V, showing a maximum value. Then these amplitudes are converted to PWM duty, as shown in the drawing, the signal with a small amplitude deflects in a narrow width and the signal with a large amplitude deflects in a large width. With respect to the property of the signal, the modem waveform is an AC signal, so that the deflection can be seen as shown in the drawing and the control signal is seen as if it is stopped. In this embodiment, the timing of each insulating coupler is synchronized, so that as shown in Fig. 6, the carrier waveform, modulated waveform, and PWM waveform of the control signal are lined up and the mutual interference is minimized. In the modem circuit, a sending or receiving signal is converted from analog to digital or from digital to analog at the predetermined timing. However, even if sampling is executed for each period T in the PWM portion by synchronizing the clock supplied from the modem with it, the effect can be minimized (in the asynchronization, there is an effect of beat noise).

The principle of crosstalk reduction will be explained hereunder more in detail.

When a plurality of insulating couplers of pulse width modulation are operated at the same time, the PWM waveforms are overlapped and the rising and falling positions approach each other, so that mutual interference that the noise generated in the self circuit by the operation of the self circuit affects the operation of another circuit by an electric connection of the devices and circuits and disturbs the rising and falling timings of another circuit, so-called crosstalk is generated. In application that when 3 to 5 insulating couplers are necessary for the DAA circuit, the PWM insulating coupler is used for analog data transmission, a waveform distortion is generated by this disturbance and the S/N ratio of the transmission signal is degraded by this distortion. Therefore, for example, in a sound signal, noise increases and in modem application, a transmission error occurs. When the PWM carrier clock timing is synchronized, as shown in the drawing, there is an effect that at least the overlapping of the logic level timing and the analog signal timing can be separated. Even in a system using only the logic level PWM which will be described later, the disturbance of timing is limited to the neighborhood of the logic level, so that there is an effect that the effect of crosstalk is minimized.

Fig. 6(b) shows the PWM modulation timing when the principle is applied to a triangular waveform carrier. In this case, in addition to that the PWM modulation timing appears on both sides of the triangular wave because the carrier shows a triangular waveform, the same problem is basically included. However, when this embodiment is executed, the same effect can be obtained. Since the clock for the insulating coupler 105 for transferring the termination detection signal Rdet is generated by the oscillator OSC 112 arranged on the line side, it does not match with the operation of another insulating coupler in timing. However, since the oscillation is inhibited when the OFHK control signal is inputted and the operation of the oscillation circuit is stopped by this action before the modem communication starts, there is an effect that the effect of crosstalk can be suppressed by it.

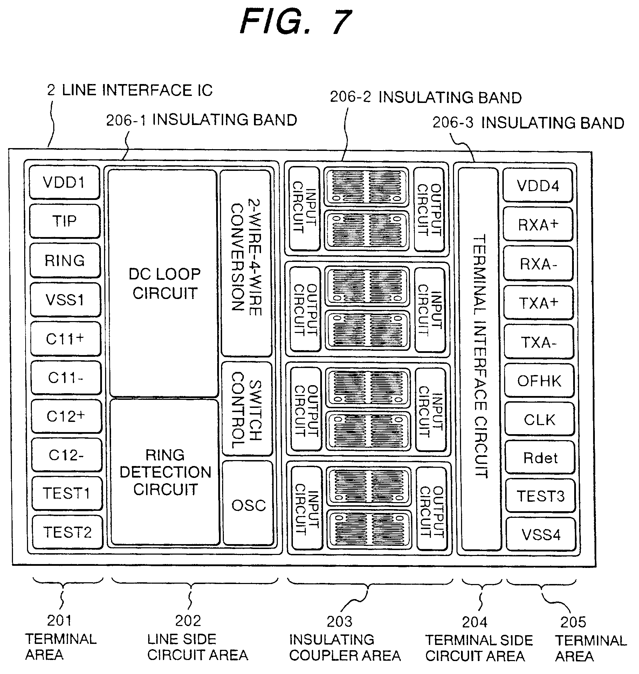

Fig. 7 is a conception diagram of layout of this line interface IC. In Fig. 7, numeral 2 indicates a line interface IC and 206-1, 206-2, and 206-3 indicate insulating bands and enclose a line side terminal area 201, a line side circuit area 202, a terminal side circuit area 204, and a terminal area 205 respectively. Numeral 203 indicates the four insulating couplers shown in Fig. 1 which are arranged in one row in the insulating coupler arrangement area.

The characteristics of this layout are (1) four insulating couplers using capacitive insulating barriers are used, (2) the line side circuit and the terminal side circuit are geometrically arranged so that they are separated with the insulating couplers lying between them, and (3) each of the line side circuit and terminal side circuit is enclosed by an insulating band. The insulating band has advantages that the circuits on the line side and terminal side are insulated and separated respectively by it, and the inside of each area can be freely designed without taking the dielectric strength between the primary circuit and the secondary circuit into account, and the evaluation and management of the insulating capability are simplified at the same time.

When the package of this integrated circuit is to be mounted, needless to say, it is necessary to secure the insulation distance withstanding air insulation for the part of the package projected outside and to mold the inside and execute the insulation process.

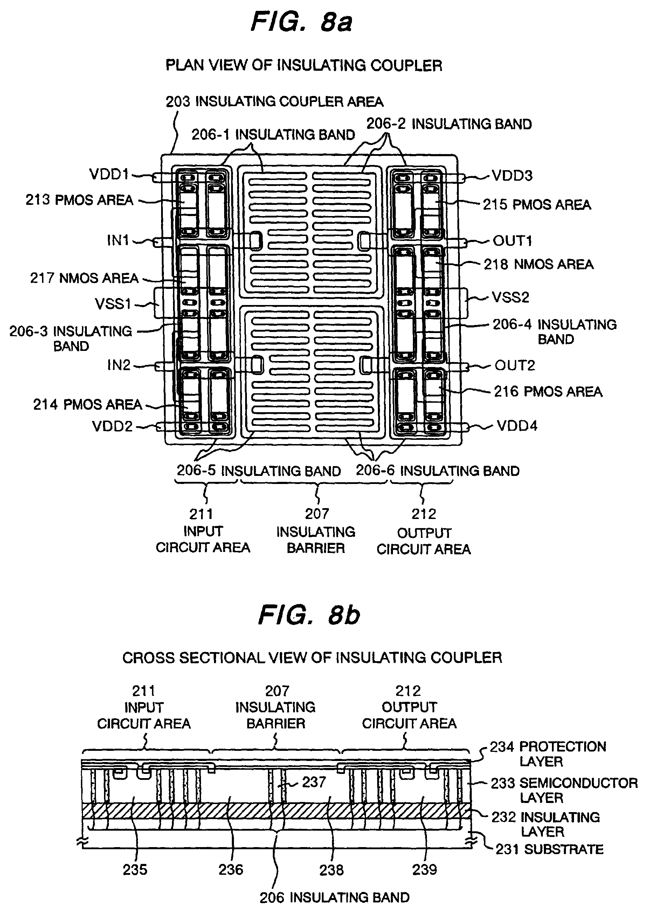

Next, the structure of the insulation coupler portion shown in Fig. 7 will be explained by referring to Fig. 8. Fig. 8(a) is a plan view, and Fig. 8(b) is a cross sectional view, and both drawings schematically show only the drive circuit and detection circuit. In Fig. 8(a), numeral 203 indicates an insulating coupler area, 206 an insulating band, 207 an insulating barrier, 211 an input circuit area, and 212 an output circuit area. The insulating band 206 forms many patterns of 206-1 to 206-6. The portion codes of the insulating barrier 207 are partially omitted because they are complicated but they are the same. The input circuit area 211 and the output circuit area 212 further comprise PMOS areas 213, 214, 215, and 216 and NMOS areas 217 and 218. As input terminals of the input circuit, two inverter input terminals IN1 and IN2 of the drive circuit are indicated. As output terminals of the output circuit, two inverter output terminals OUT1 and OUT2 of the detection circuit are indicated. VDD1 to VDD4 indicate separated power terminals and VSS1 and VSS2 indicate separated grounding terminals. The characteristics of the plan view (a) are (1) the circuit area is separated by the insulating bands, (2) with respect to the insulating barrier, the insulating bands are formed in a pattern of teeth of a comb so as to reduce the opposed area, and (3) four capacitors are horizontally connected in series so as to form two sets of insulating barriers. These are driven in a complementary PWM digital waveform as mentioned above. There is little crosstalk between the two sets of insulating barriers. However, in the case of a use in which it is questionable, it is effective to provide a long space, a power pattern VDD, and a VSS wiring pattern between the two sets of insulating barriers, that is, horizontally and arrange them between the insulating barriers so as to loose the connection. Even when a plurality of insulating couplers are used, the same arrangement is effective. In the circuit area, the PMOS areas and NMOS areas are separated by the insulating bands. Even if an unexpected surge voltage is provisionally applied to the circuit due to this separation, a short-circuit or penetration between the power supplies due to continuity of the parasitic transistor, that is, the latch-up phenomenon will not be generated in general.

In Fig. 8(b), numeral 231 indicates a substrate, 232 an insulating layer, 233 a semiconductor layer, and 234 a protection layer, and the semiconductor area is formed by many insulating bands 206, and the input circuit area 211, the insulating barrier 207, and the output circuit area 212 are arranged from the left. In this structure of this embodiment, a silicon wafer (SOI substrate) having an insulating layer of SiO₂ with a thickness of about 2 microns as an inner layer is prepared and each area is formed on it using the thin-film process using a photo mask. In Fig. 8(b), the insulating bands 206-1 to 206-6 are SiO₂ layers with a width of about 1.5 µm. Structurally, the areas such as the input and output circuit areas and insulating barrier area are divided and formed by the insulating bands 206 on a silicon wafer having an insulating layer as an inner layer and furthermore the protection layer 234 is overlapped on them. The silicon wafer has a constitution that one SiO₂ layer or a multi-layer comprising a polysilicon layer having an oxidized surface overlapped on the aforementioned SiO₂ layer is overlapped on the substrate 231 of single crystal silicone and furthermore a semiconductor layer of single crystal silicone is overlapped on it. For bonding the layers, in this embodiment, a method that the surface of a silicon oxide film on the polysilicon surface is mirror-polished and overlapped and then joined by heat treatment at a specified temperature is used. The insulating bands 206 are SiO₂ layers and insulators. The protection layer 234 is an insulator of SiO₂ and HLD or SiN and includes a wiring layer using polysilicon or aluminum. The insulating bands 206 are formed by a method for cutting a trench once and filling it with SiO₂ or BPSG, a method for thinly oxidizing the side wall of a trench and filling it with polysilicon, a method for coating PIG or SOG, or a method for changing a semiconductor layer to an insulator by irradiating oxygen ions from the top. The capacitor comprises three electrode areas 236, 237, and 238 and the insulating band 206. By doing this, even in the trenching system that the insulating band 206 is limited to the width compared with the thickness of the insulating layer 232, the dielectric strength can be reserved by connecting the capacitor in series.

Even when an electrical request is possibly dielectric strength of one insulating band, by realizing double insulation in this way, a highly reliable part can be obtained. Numerals 235 and 239 indicate the sections of the input circuit area 211 and the output circuit area 212 and these are enclosed by two insulating bands and structured so as to obtain high dielectric strength. Since a plurality of circuits are physically insulated from the substrate by the insulating bands and insulating layer in this way, there is an advantage that this integrated circuit can be directly bonded to the frame during package mounting, hence the heat dissipation is satisfactory.

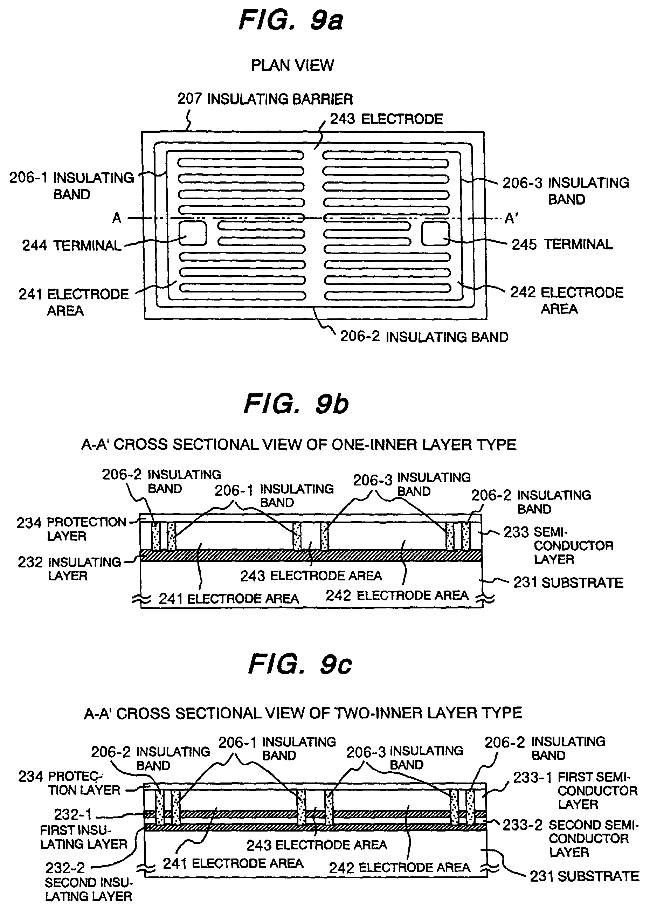

Next, the structure of the insulating barrier portion of the insulating coupler shown in Fig. 8 will be further explained by referring to Fig. 9. In Fig. 9, (a) is a plan view and (b) and (c) are the cross sectional views A-A' shown in the plan view (a). In Fig. 9(a), numeral 207 indicates an insulating barrier, 206-1, 206-2, and 206-3 insulating bands of SiO₂ with a thickness of about 1.5 microns, 241, 242, and 243 electrode areas enclosed by the insulating bands 206, and 244 and 245 terminals which are holes made in the protection layers on the upper parts of the electrode areas 241 and 242. In Fig. 9(b), numeral 231 indicates an Si substrate with a thickness of about 400 microns, 232 an insulating layer with a thickness of about 2 microns, 233 a semiconductor layer with a thickness of about 15 microns, and 234 a protection layer with a thickness of about 5 microns and the other numerals are the same as those shown in (a).

As shown in the cross sectional view, on a silicon wafer having an insulating layer as an inner layer, each area is formed using the thin-film process using a photo mask. The insulating band is an SiO₂ layer and an insulator. The insulating bands 206 are formed by a method for cutting a trench once and filling it with SiO₂ or a method for changing a semiconductor layer to an insulator by irradiating oxygen ions from the top. The capacitor comprises the three electrode areas 241, 242, and 243 and the two insulating band 206-1 and 206-3. The insulating bands are patterned by folding each band as shown in the drawing and the capacity can be efficiently obtained with a small semiconductor area by making the contact portion of the electrodes 241, 242, and 243 longer. Incidentally, in this embodiment, the insulation performance is obtained that the capacity is about 2 pF for a square of about 160 microns and the dielectric strength is about 750 V for each insulating band in the DC withstand voltage test. A high voltage is applied between the terminals 244 and 245 and as viewed from the outside of the insulating barrier 207, a pattern that the electrode areas 241 and 242 are doubly enclosed by the insulating bands is obtained. When forming a pattern of the insulating bands 206, a circular pattern (a radius of 2 to 5 microns) is used for the portions to be folded and the angles as far as possible so as to prevent a sharp pattern. The portion of the insulating band 206-2 is necessary so as to insulate and separate from the other circuit portions. Fig. 9(c) is a structural diagram when each insulating layer cannot be made thicker and by use of two insulating layers, the effective dielectric strength can be increased. In an IC of a multi-layer structure, a considerable warp can be seen. However, by using an insulating multilayer and adjusting the thickness of each layer, an effect is obtained that the stress is dispersed and the warp is reduced.

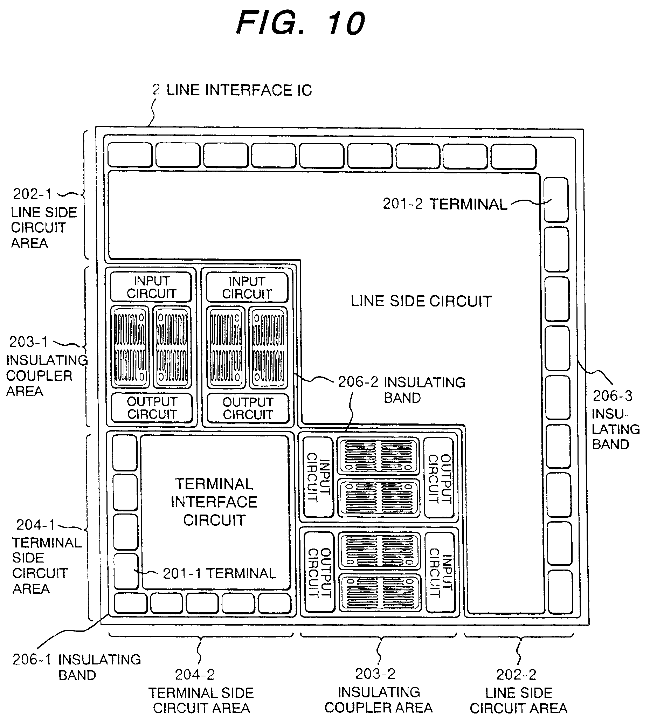

An example that the insulating couplers are arranged in one row as shown in Fig. 7 is indicated. However, the arrangement of insulating barriers can be changed as shown in Fig. 10. Namely, Fig. 10 is another layout conception of a line interface IC and as shown in the drawing, respective two insulating couplers are perpendicularly arranged. A test voltage of 1500 VDC is applied between the line side circuit and the terminal side circuit. However, since the circuit areas are enclosed and arranged by the insulating bands respectively on the SOI substrate, a considerably free layout is available.

The layout is restricted by wiring between the areas and arrangement and size of terminals. This layout is characterized in that when the circuit areas and the number of terminals are unbalanced, the areas can be efficiently arranged.

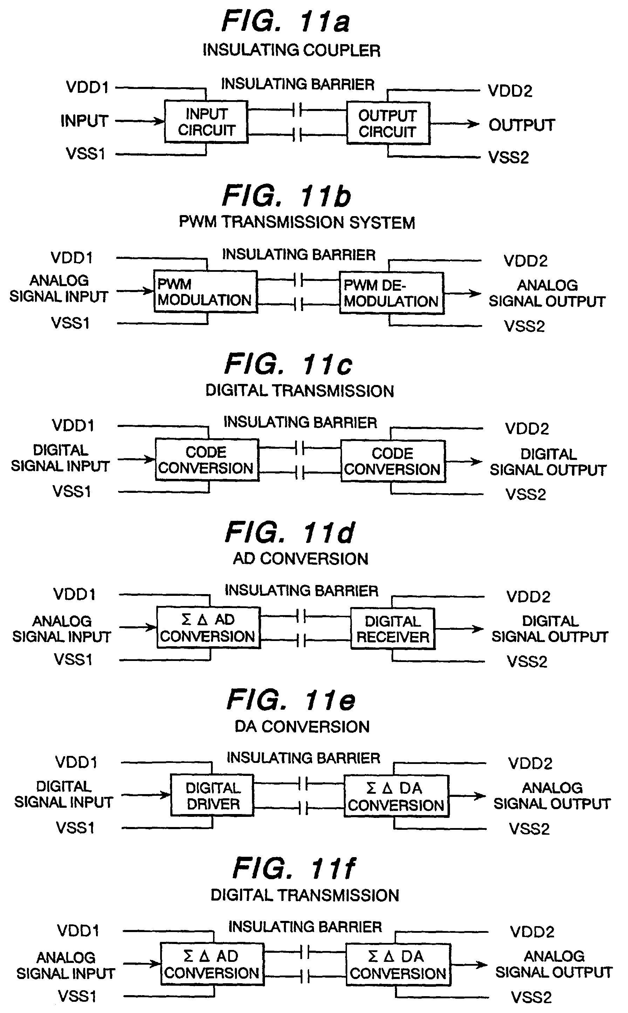

Next, the insulating coupler transmission method of the present invention will be explained by referring to Fig. 11. In Fig. 11, various transmission methods from (a) to (f) are shown using block diagrams. The insulating barriers are the capacitors of the present invention. The insulating coupler of the present invention uses two insulating barriers and is driven by a complementary waveform so that a signal can be precisely transmitted even if the receiver side is floating. The input circuit is supplied with power from the power terminal VDD1 and the grounding terminal VSS1 and converts and outputs the signal received from the input terminal to the waveform for driving one terminal of the insulating barrier. The output circuit is supplied with power from the power terminal VDD2 and the grounding terminal VSS2, detects the waveform appearing at the terminal on the opposite side of the insulating barrier, and converts and outputs it to an output signal. With respect to a converted waveform, various methods such as the PWM (pulse duty conversion) system for digitizing only the amplitude direction, or the FM system (voltage - frequency conversion) system, or the digital transmission system for also digitizing the time base direction can be used.

Fig. 11(b) shows a case of the PWM transmission system. In the PWM system, the input circuit samples the inputted analog signal in the fixed period T more than several tens times of the signal band and converts and transmits the amplitude to the duty (0 volt input corresponds to 50% duty) in the time base direction and the output circuit detects it and converts the duty to an amplitude value once again, hence reproduces the input waveform, and outputs an analog signal. By analogically processing the duty, a high resolution in principle can be obtained. Needless to say, a digital signal may be transmitted.

Fig. 11(c) shows a case of digital transmission of the present invention. In the digital transmission, the code conversion is executed, for example, like the Manchester code so that the same level is not continued in the transmission waveform, and then the insulating barrier is driven, and the output circuit detects it, reversely converts it, and reproduces the original digital signal. In this case, in synchronization with the transfer frequency of the input digital signal, the code conversion and reverse conversion are executed. This method is characterized in that since little conversion is executed in the amplitude direction, it is hard to be affected by noise.

Fig. 11(d) shows a case that AD conversion input is executed via the insulating barrier. The input circuit converts an analog input signal from analog to digital, then performs the same code conversion as that of (c), and drives the insulating barrier. The output circuit detects it, performs reverse code conversion, and then outputs a digital signal.

Fig. 11(e) shows a case that DA conversion output is reversely executed via the insulating barrier. The input circuit performs the same code conversion as that of (c) for a digital input signal and then drives the insulating barrier. The output circuit detects it, performs reverse code conversion, converts it from digital to analog, and then outputs a digital signal.

Fig. 11(f) shows a case that (d) and (e) are combined and input and output of an analog signal are executed by use of AD conversion and DA conversion. The signal transmission system from (d) to (f) is a constitution suitable for the sound signal processing analog front end of a modem and the line interface when the DSP is selected as a connection destination of a digital signal.

These systems can be integrated on a monolithic IC by the present invention. More concretely, although the aforementioned capacitive insulating barrier is a circuit for connecting two circuits, the stray capacity between the insulating barrier and the substrate is large and greatly different from that when the input circuit, output circuit, and insulating barrier are separately created and combined. Therefore, the transmission efficient by the insulating barrier is low such as 1-severalth. In the aforementioned embodiment, in the first stage of the output circuit, the amplifier circuit is arranged and the detection process and demodulation process are performed behind it.

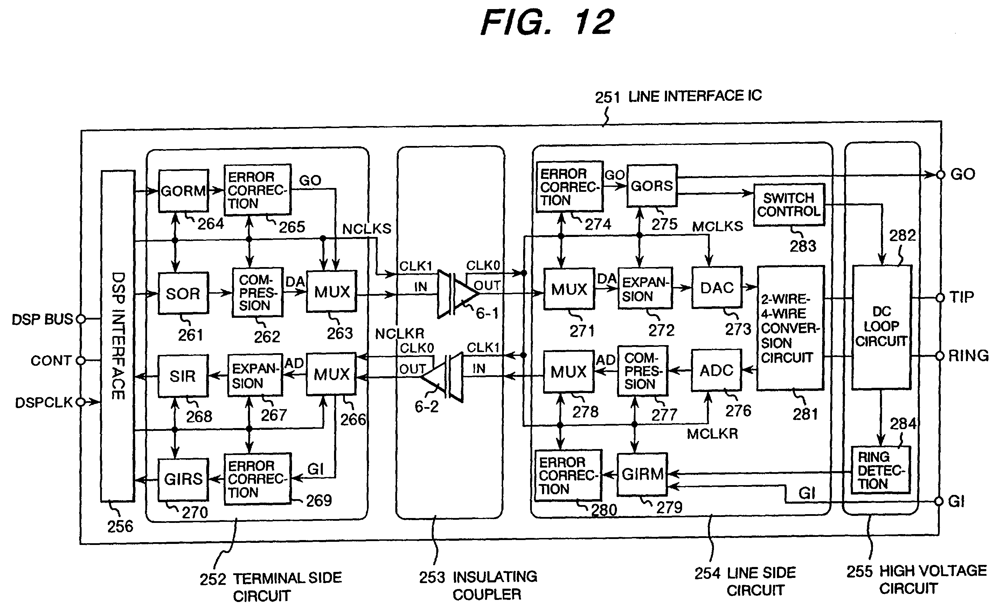

Fig. 12 is a circuit block diagram of the modem device of another embodiment of the present invention.

In Fig. 12, numeral 251 indicates a line interface IC of this embodiment, 252 a terminal side circuit, 253 an insulating coupler, 254 a line side circuit, and 255 a highly dielectric circuit. The terminal side circuit 252 comprises a DSP interface 256, a modem data output interface SOR 261, a modem data compression circuit 262, a sending side multiplexer 263, a master register GORM 264 of a general purpose output register, an error correction circuit 265, a receiving side multiplexer 266, a receiving modem data expanding circuit 267, a modem data input interface SIR 268, a general purpose input data error correction circuit 269, and a slave register GIRS 270 of a general purpose input register. The insulating barrier 253 comprises a sending path insulating coupler 6-1 and a receiving path insulating coupler 6-2, and the line side circuit 254 comprises a multiplexer 271 of a line side sending path as a sending path, a sending modem data expanding circuit 272, a DA converter 273, a general purpose output data error correction circuit 274, a slave general purpose register 275, an AD converter 276, an AD conversion data compression circuit 277, a multiplexer 278, a master general purpose input register GIRM 279, an input data error correction circuit 280, a 2-wire - 4-wire conversion circuit 281, and a switch control circuit 283, and the highly dielectric circuit 255 comprises a DC loop circuit 282 and a call signal detection circuit 284.

The first characteristic of this circuit constitution is that the AD converter and DA converter are arranged on the line side and a signal passing the insulating coupler is digital data. As a result, as described later, the noiseproof performance when a signal passes the insulating barrier is greatly improved. The second characteristic is that an AD conversion signal and a DA conversion signal are compressed once and pass through the insulating coupler, and a control signal is coded for error correction and positioned in this empty portion, and the insulating couplers 6 are reduced by half such as 6-1 and 6-2. When the insulating barrier is mounted on a semiconductor substrate, a large area is required. Therefore, even if an increase in the area due to additional circuits for data compression and expansion and error correction is taken into account, the reduction in the number of insulating couplers is advantageous for reducing the chip area. Furthermore, the third characteristic is that the circuit constitution is functionally the same as that shown in Fig. 1 and the internal circuits of the highly dielectric circuit 255 and the 2-wire 4-wire conversion circuit 281 and switch control circuit 283 of the line side circuit 254 have the exactly same functions. The fourth characteristic is that the multiplexer 266 inputs both the reproduced clock of the insulating coupler 6-2 and the clock from the DSP and adjusts the timing. When a 1-bit or 2-bit buffer memory is arranged, the timing can be adjusted. The fifth characteristic is that the general purpose input and output registers GOR and GIR successively transfer contents of the master register to the slave register. Needless to say, as deformation of this circuit, if the art makes progress and the insulating coupler becomes smaller, when the noise reduces and data is not easily mistaken, compression, error correction, and the multiplexer may be omitted.

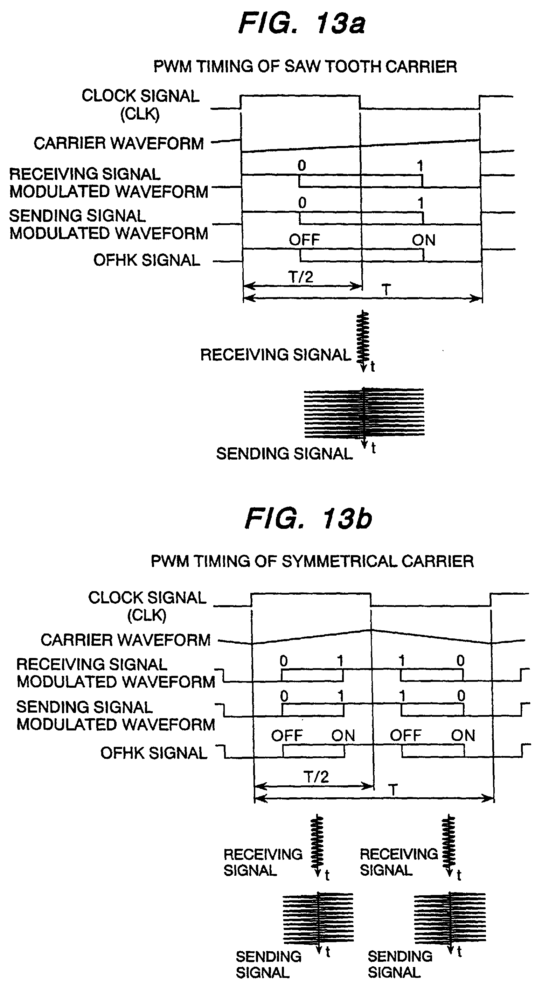

Next, the effects of this embodiment will be explained by referring to Fig. 13.

In Fig. 13, (a) shows a case that a saw tooth waveform is used as a carrier and (b) shows a case that a triangular wave is used as a carrier. Even if a sending signal and a receiving signal are analog signals as shown in both drawings, only a digital PWM signal passes through the insulating barrier and the operation timings of the DSP, modem process, and insulating coupler are synchronized, so that the performance can extremely withstand a transmission error by the insulating barrier.

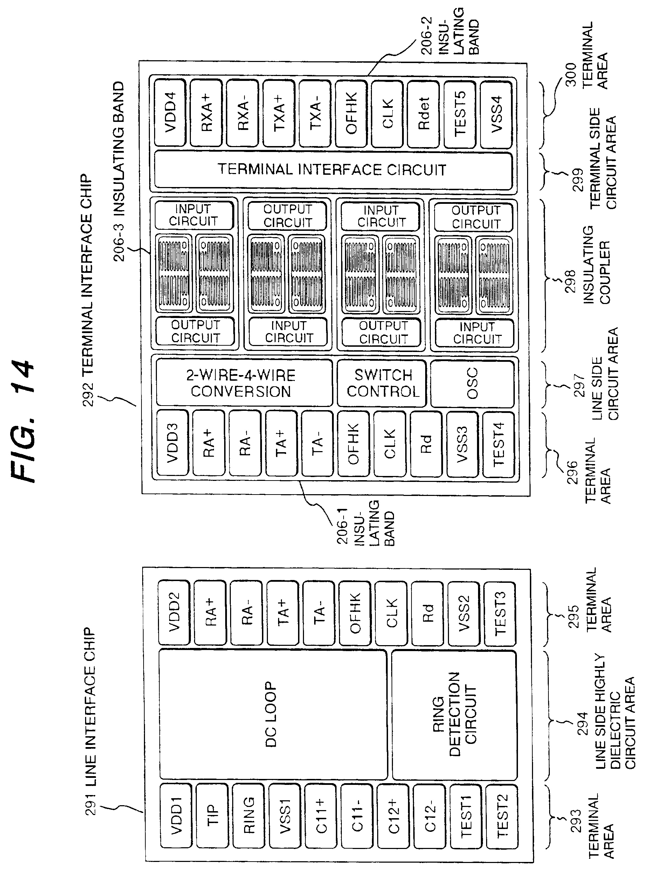

Fig. 14 shows a case that the line interface IC comprises two chips. In Fig. 14, numeral 291 indicates a line interface chip and 292 indicates a terminal interface chip. In the line interface chip 291, a terminal area 293, a line side high voltage circuit area 294, and a terminal area 295 are arranged and in the terminal interface chip 292, a terminal area 296, a line side low voltage circuit area 297, an insulating coupler area 298, a terminal side circuit area 299, and a terminal area 300 are arranged. In the line side highly dielectric circuit area 294, a DC loop circuit and a termination (RING) detection circuit are arranged. In the line side low voltage circuit area 297 of the terminal interface chip 292, a 2-wire - 4-wire conversion circuit, an OFHK switch (SW) control circuit, and an originating circuit are arranged. By doing this, there is an advantage that by separating the process condition of the line interface chip 291 which is required by a high voltage circuit device from the circuit of the insulating barrier or a low voltage circuit device, an efficient process can be selected. By reducing the size of one IC chip, there is an effect that the effect of the total yield of the process is reduced and the number of acquired IC chips per wafer is increased. The line interface chip may be used as a discrete circuit using an individual part. By doing this, the terminal interface chip receives only a logic signal and a signal at the modem signal level and the portion to be directly connected to the line is eliminated, so that an effect is produced that the application range can be easily spread such as application to other than the modem, for example, use as an internal circuit of a multifunction telephone set.

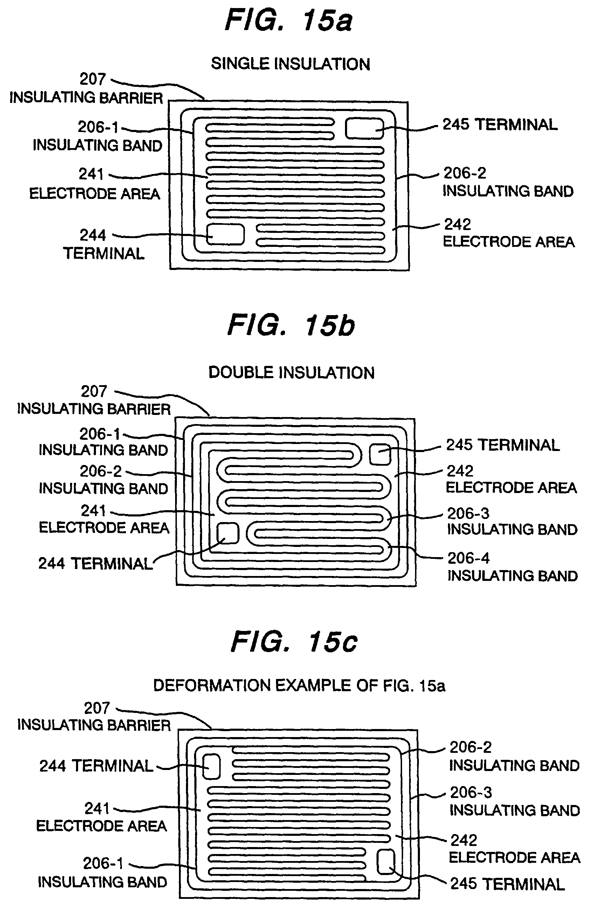

Fig. 15 is a structural diagram of another embodiment of the insulation barrier, and (a) is a plan view of single insulation, and (b) is a plan view of double insulation, and (c) is a plan view of another deformed embodiment of double insulation. In Fig. 15, numeral 207 indicates an insulating barrier, 206-1, 206-2, and 206-3 insulating bands, 241 and 242 electrode areas enclosed by the insulating bands 206, 244 and 245 terminals which are holes made in the protection layers on the upper parts of the electrode areas 241 and 242, and 301-1 and 301-2 partitions. Figs. 15(a) and 15(b) show embodiments of patterns of insulating bands having no acute angles at all in the same way as those of the embodiment shown in Fig. 9.

The characteristic of the pattern shown in Fig. 15(a) is that the electrode areas 241 and 242 having the terminals 244 and 245 are formed by drawing with a single stroke of the pen by the insulating bands 206-1 and 206-2. By doing this, the portion where the insulating bands are in contact with each other in a T shape can be eliminated and there is an effect that not only the filling efficiency in a groove by the trench method is satisfactory but also the concentration of the electric field is reduced. The same may be said with Fig. 15(b) and the characteristic of this pattern is that the electrode areas 241 and 242 having the terminals 244 and 245 are formed by drawing with a single stroke of the brush by the insulating bands 206-3 and 206-4 and these are further enclosed by the insulating bands 206-1 and 206-2 respectively. By doing this, intermediate electrodes are formed between the insulating bands 206-1 and 206-3 and between the insulating bands 206-3 and 206-4, so that there is an effect that two times of dielectric performance can be realized. The pattern shown in Fig. 15(c) is a deformation example of the embodiments shown in Figs. 15(a) and 9 and if the two T-shaped portions are permitted, there is an effect that an insulating barrier having a satisfactory area efficiency can be realized by enclosing by the insulating band 206-3. The methods of (a) and (b) can be efficiently expanded even when the number of series is increased.

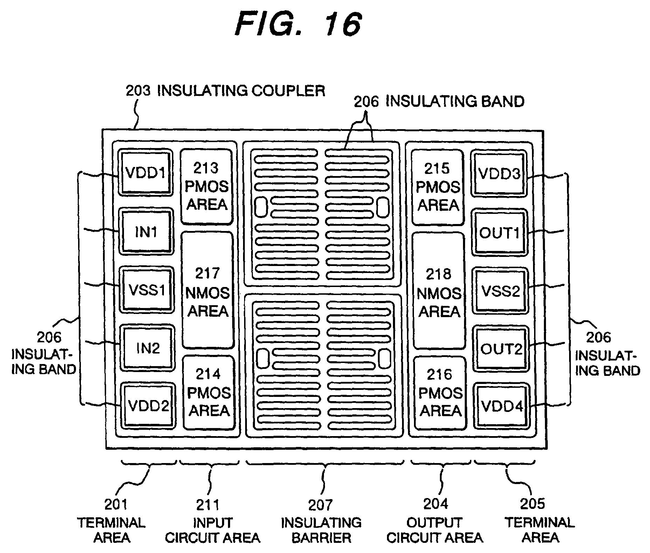

The present invention is valid even when a single insulating coupler is used and it will be explained hereunder by referring to Fig. 16. Fig. 16 is a structural diagram of an embodiment of the insulating coupler of the present invention. An insulating coupler 203 shown in Fig. 16 is structured so that a terminal area 201 for the input circuit and a terminal area 205 for the output circuit are provided in the portion of the insulating coupler shown in Fig. 8 and the respective terminals are arranged and the size thereof is a square of about 2 mm. By doing this, a micro-monolithic insulating coupler part of the analog PWM system can be produced. Although the part is certainly mounted on a package in the later process, it is very small because it is monolithic. Therefore, it is mounted within an application device such as a probe of a measuring instrument and various medical sensors and can contribute to miniaturization and high performance of these devices.

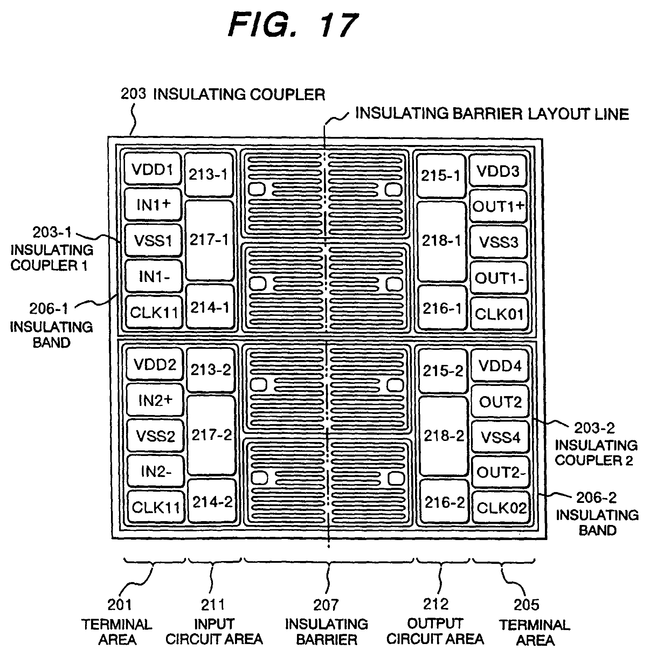

Fig. 17 is a layout structural diagram when the two insulting couplers shown in Fig. 16 are mounted on one chip. In Fig. 17, numeral 203 indicates a 1-chip insulating coupler containing two couplers and 203-1 and 203-2 indicate a built-in insulating coupler 1 and insulating coupler 2 respectively and are enclosed by insulating bands 206-1 and 206-2 respectively. The characteristics of this layout are (1) each insulating coupler is enclosed by insulating bands 62-1 and 62-2 and (2) the insulating barriers in which the electric field is concentrated are lined up. By doing this, the dielectric strength can be secured between any of two inputs and any of two outputs and there is an effect that each circuit device can be freely arranged with the dielectric strength maintained. By use of this structure, an unnecessary electric circuit connection can be minimized and the application range can be spread.

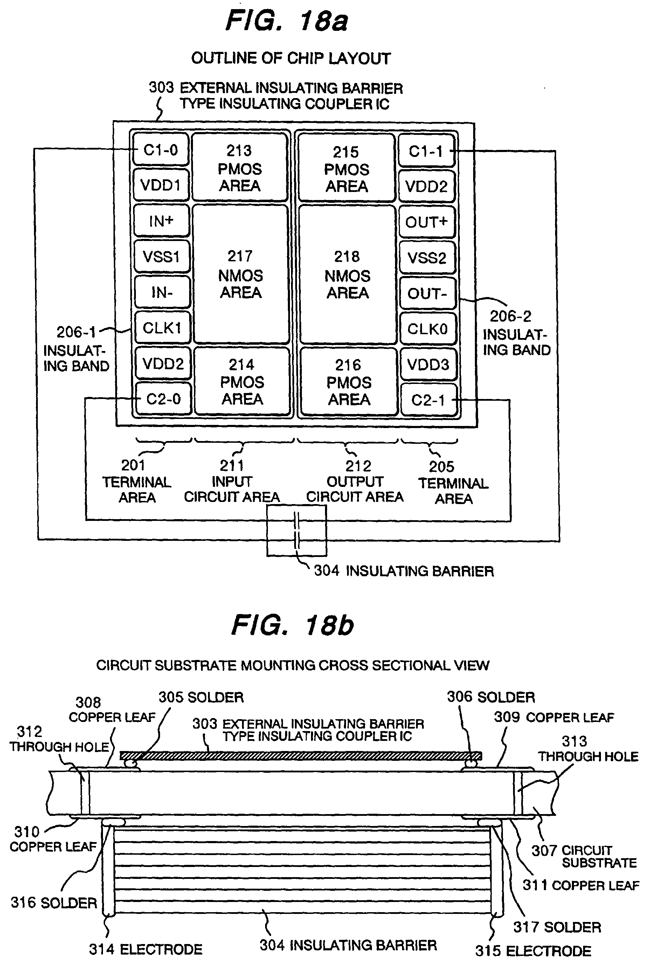

Fig. 18 is still another embodiment of the insulating coupler of the present invention and shows the structure of an integrated circuit and insulating coupler when an input circuit and output circuit insulated by insulating bands respectively are structured as integrated circuits and an insulating coupler is formed by combining a ceramic capacitor and an insulating barrier. In Fig. 18, (a) shows an outline of chip layout and (b) shows a cross sectional view when the IC and ceramic capacitor are mounted on a circuit substrate. In Fig. 18(a), numeral 303 indicates an insulating coupler IC, 206-1 and 206-2 insulating bands enclosing the input circuit area and output circuit area respectively, and 304 an external insulating barrier and terminal areas 201 and 205 include connection terminals "C1-O and C2-O" and "C1-I and C2-I" with the external insulating barrier 304 respectively. The other numerals have the same meanings as those shown in Fig. 16.

In Fig. 18(b), numeral 303 indicates an insulating coupler IC and 305 and 306 indicate solder. Numeral 307 indicates a circuit substrate having a circuit connection pattern of copper leaf 308, 309, 310, and 311 on both sides and through holes 312 and 313 are provided as required. The circuit substrate 307 may be a multilayer of copper leaf as required unless the insulating property is damaged. An insulating barrier 304 is a chip capacitor and mounted on the surface of the circuit substrate with the solder 316 and 317. By doing this, the insulating barrier occupying a comparatively large area in the semiconductor integrated circuit is mounted as another chip and the size of the insulating coupler increases. However, a constitution method that a realistic price can be set, and the capacitor value of the insulating barrier is positively increased, and the operation timing frequency can be freely selected is made possible. Namely, the low frequency characteristic is improved by increasing the capacitor value, so that there is an advantage that the waveform can be easily transmitted and for example, small power also can be transferred by a charge pump circuit.

As mentioned above, according to these embodiments, an insulating coupler can be reasonably formed on a semiconductor integrated circuit and the use of an integrated circuit can be widely spread. The insulating coupler formed in this way has an effect that it greatly contributes to miniaturization and low price.

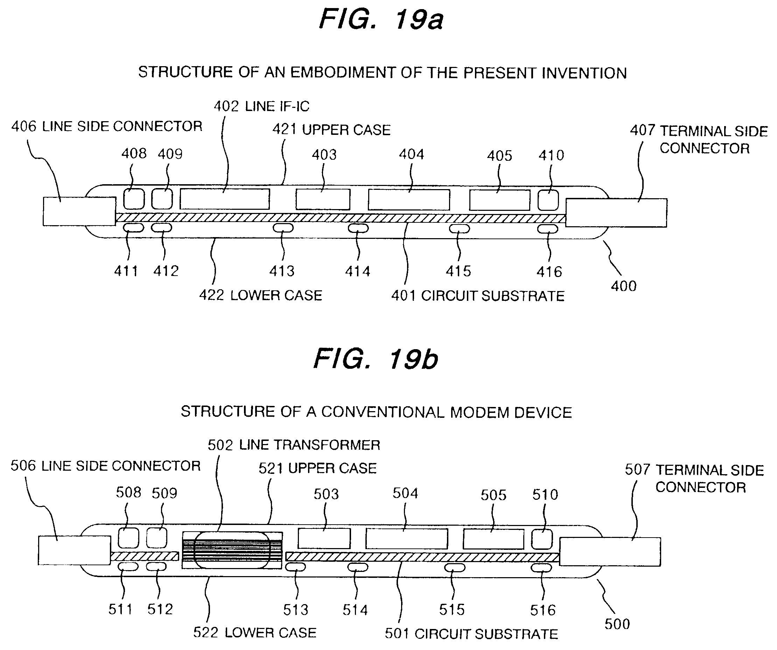

Fig. 19 is a structural diagram showing the concept of an embodiment that the monolithic line interface of the present invention is applied to a card modem device. Fig. 19(a) shows an embodiment of the present invention and Fig. 19(b) shows a conventional card modem. In Fig. 19(a), numeral 400 indicates a whole card modem of this embodiment, 401 a circuit substrate of this embodiment, 402 a line interface IC of this embodiment, 403 an AFE, 404 a DSP, 405 other ICs, 406 a line side connector, 407 a PC side connector, 408 a varister, 409 a highly dielectric capacitor, 410 a capacitor, and 411 to 416 chip parts such as other resistors and capacitors. In Fig. 19(b), numeral 450 indicates a conventional whole card modem, 451 a conventional circuit substrate, 452 a line transformer which is a conventional line interface, 453 an AFE, 454 a DSP, 455 other ICs, 456 a line side connector, 457 a PC side connector, 458 a varister, 459 a highly dielectric capacitor, 460 a capacitor, and 461 to 466 chip parts such as other resistors and capacitors. This drawing shows the section of the card modem which is schematically indicated and the comparison shows that in the conventional card modem 450, the circuit substrate 451 is hollowed out and the line transformer 452 is arranged in the hollowed portion, while in the embodiment of the present invention, the line interface IC 402 can be mounted almost in the sane way as the other ICs shown in from 402 to 405. Therefore, it is not necessary to hollow the circuit substrate 401 and the present invention is economical. Since a special transformer is not used, there is the possibility that the constitution can be made economical. Furthermore, since the transformer can be omitted, there is a possibility of further miniaturization.

Fig. 20 is a circuit block diagram of an embodiment when the monolithic digital insulating coupler of the present invention is applied to an AFE. The AFE of this embodiment is used for processing a voice band signal and performs oversample (2 MHz) AD and DA conversion as analog and digital conversion, reduces the speed to 32 ksps once by a decimeter filter and interpolator, furthermore performs the low pass filtering process by the internal DSP, and finally inputs or outputs digital data at a speed of 8 ksps.

In Fig. 20, numeral 500 indicates a monolithic analog front end (I-AFE) containing digital insulating couplers 501 to 506. The I-AFE 500 comprises an analog input line including a multiplexer (MUX) of the original AFE, a pad amplifier (PDA) 512, a prefilter (PF1) 513, an oversample analog to digital converter ADC 514, a decimeter filter (DCM) 515, an AD conversion output buffer (ADCR) 516, a built-in (in-) DSP 517, and a receiving output buffer (RXDR) 518, an analog output line including a sending buffer (TXDR) 521, a DA conversion input buffer (DACR) 522, an interpolator (INT) 523, an oversample digital to analog converter DAC 524, a post filter (PF2) 525, and an attenuator (ATT) 526, data I/O transfer controllers 531 and 532 of the in-DSP 517, and a 2-wire - 4-wire conversion circuit 533 at an analog I/O terminal with a control circuit added. The inside of the I-AFE 500 is reset or controlled in power down by a control circuit (CONT) 541. A reset signal is transmitted to the circuit on the left (hereinafter referred to as the analog I/O side) via the digital insulating coupler 506, combined with a reset signal following power ON or OFF on the analog I/O side by a reset circuit 542, and used as a reset signal for the circuit on the analog I/O side. To finely control the I-AFE 500, an external device uses control registers (CONTR) 551 and (STATUS) 554. The content of the CONTR 551 (STATUS' 553) is copied into the control registers (CONTR') 551 and STATUS 554 of the analog (digital) I/O circuit via the digital insulating couplers 504 and 503 and controls SW1 to SW3 of the analog I/O side circuit and other circuits and sets the level of a general purpose output port (GPO). The operation timing of the I-AFE 500 is converted to 8-fold 16 MHz by a 2-MHz clock (MCLK) PLL given by an external (ex-) DS0 536 and used as basic timing together with the inputted 2 MHz. Needless to say, it is also transmitted to the analog I/O circuit via the digital insulating coupler 505 and various timings are generated by a timing circuit 562.

A reference voltage generation circuit 563 is a circuit for giving a reference voltage to the analog I/O circuit for operating by a single power supply and generates a reference voltage VREF of (VDD1 - VSS1)/2.

Next, the operation will be explained. The 2-wire - 4-wire conversion circuit 533 is a circuit for exchanging 2 wires of the pay station line and 4 internal sending and receiving wires when the I-AFE 500 is used in a mode device and has functions of line impedance matching and I/O amplification. An analog input signal is inputted via the 2-wire - 4-wire conversion circuit 533 or directly inputted from the IN+ and IN- terminals. However, the MUX 511 is switched and used by a signal SW1 beforehand according to one of them. The PDA 512 can switch the gains 0 dB and 6 dB by a signal SW2.

The PF1 513 is an analog filter for deleting a signal of an unnecessary frequency band before performing AD conversion and a secondary low pass filter at a cut-off frequency 48 kHz in this embodiment. The ADC 514 is a secondary ΔΣ modulator operating at 2 Msps and outputs an AD conversion result 2 bits long every 0.5 µs. The ADC 514 transmits this AD conversion output to the DCM 515 and thins it to 2 ksps. The output of the DF1 515 is 16 bit/w. However, the speed is slow such as 32 ksps, so that the DF1 515 serially converts it to 2 Msps and transmits it to the in-DSP 517 via the ADC 516 of the I/O side circuit together with the timing signal via the insulating coupler 502. The in-DSP 517 performs the flat characteristic correction for this decimeter output by the digital signal processes IIR and FIR and performs the LPF process at 4 kHz or less. The in-DSP 517 serially transmits the processing result to the ex-DSP 236 as 16-bit/w data for every 8 ksps via the receiving buffer 518.

Next, the analog output line receives the data (TXD) to be outputted from the ex-DSP 536 from the sending buffer TXDR 211 every 8 ksps, performs the same filtering process as that of analog input by the in-DSP 517, and transfers this result to the interpolation filter (INT) 523 at a speed of 32 ksps by interpolating it as 16-bit/w data via the DA output buffer (DACR) 522. Also in this case, the analog output line performs serial conversion and transmits the data via the insulating coupler 501. The INT 523 further performs the interpolation process, transfers it to the DAC 514 as 6-bit/w data at a speed of 2 Msps, and outputs an analog value. The loopback component remaining by the process by the in-DSP 517 and the INT 523 is removed by the post filter PF2 525 and outputted via the ATT 226 which can switch 0 dB, -6 dB, and -∞ dB. For these operation timings of the analog output line, the timings of the analog input line are used.

These processing timings are timings that the processing timing of the ΔΣ modulator and demodulator of basically the sane timing among the 2-MHz timings, the interpolator and decimeter processing timing to be inputted and outputted at 2 Msps and 32 ksps, and the DSP processing timing to be inputted and outputted at 32 ksps and 8 ksps are allocated in order. Therefore, the analog I/O side circuit and digital I/O side circuit are separated by the insulating couplers 201 to 205. However, it is essential to synchronize and operate them and this is the reason why it is important to set an isolator only for timing.

Next, application of the I-AFE 500 to a modem together with the ex-DSP 536 will be explained.

The I-AFE 500 viewed from the ex-DSP 536 is an I/O circuit of an analog signal and the sample timing is important. Therefore, in most modems, the sample timing of the ADC 514 is adjusted so that a most advantageous timing for discrimination and decision can be obtained during demodulation. Therefore, delay or advance of the timing is transmitted to the I-AFE 500 from the ex-DSP 536 by the clock MCLK. Namely, to advance the timing, Δf is added and to delay the timing, -Δf is added and the I-AFE 500 is informed of it. This process is performed every several tens ms or several hundreds ms. When the I-AFE 500 operates at a selfish timing, it does not agree with the timing requested by the ex-DSP 536, so that data becomes too much or too little, and the processing time breaks down, and large noise is generated. To synchronize the I-AFE 500 with this clock delaying or advancing, the PLL is installed inside the I-AFE 500 so as to synchronize the internal timing. Needless to say, if the timing accuracy request permits, there is a complementary method available using the timing error of the automation means in the modem and in this case, the circuit timing adjustment is not executed.

In this embodiment, data transfer between the decimeter filter and interpolator and the in-DSP is serial high-speed transfer, so that there is an effect that the number of insulating couplers is decreased. Since the modem includes a plurality of standards, a plurality of sample timings may be requested. To respond to it, the division ratio of the PLL 561 and the timing circuit 562 can be controlled by the CONTR 562. Furthermore, by applying the aforementioned error correction means to the insulating couplers to which the control signal is transferred, the operation can be stabilized.

In this embodiment, a constitution that the digital filter is signal-processed by the internal DSP 517 is indicated. The process of the internal DSP is a dedicated process for AD conversion and DA conversion and these circuits may be formed by appropriate dedicated logic. When those circuits comprise dedicated logic, more economical integration may be realized. The two systems of analog input line and analog output line may be processed by one processing means.

Next, the layout concept on the integrated circuit shown in Fig. 20 is shown in Fig. 21. In Fig. 21, a whole 600 indicates the whole AFE integrated circuit and it is formed on an SOI substrate. An insulating band 601 is a means for insulating the analog I/O circuit area, and an insulating band 602 is a means for insulating the insulating couplers (indicated by isolators 501 to 506), an insulating band 603 is a means for insulating the digital I/O circuit area, and an insulating band 604 is a means for insulating between other chip areas on the wafer and the areas and the insulating band 604 is a means for preventing circuit connection with the substrate linking with the scribe end face. The names assigned to more finely divided areas in each area correspond to Fig. 20 respectively.

The characteristics of this layout are that the circuit areas are further enclosed by trenches so as to form an analog I/O side circuit area 601, an insulating coupler area 602, and a digital I/O side circuit area 603, and (1) a double trench is formed between each areas so as to insulate between the areas, and (2) furthermore the whole is enclosed by a trench 604 so as to insulate between the chips. The trench 604 is a multitrench.

By enclosing each circuit block in the circuit areas 601 to 603 by a trench, the circuits are insulated and separated from each other and the devices are separated. However, when furthermore a multitrench is used and the trenches are grounded, a noise shield due to mutual interference can be formed. By making the multiplexing rate of trenches in the circuit area higher one step than the multiplexing rate of trenches in the highly dielectric capacitor portion, the insulation cooperation is taken into account so as to limit the destruction mode to the capacitor portion. By doing this, even if a high voltage more than the standard is applied, there is an effect that a system can be constructed with the damage limited.

Next, Fig. 22 is a circuit diagram of an embodiment of a DSP modem to which the I-AFE shown in Fig. 20 is applied. In Fig. 22, numeral 500 indicates I-AFE and 700 indicates ex-DSP. When the modem is connected to a telephone line, it is connected to connection terminals TIP and RING via a protection circuit comprising resistors 701 and 702, capacities 703 and 704, and a surge protection device 705. Numerals 706 and 707 indicate switches formed by NMOS transistors and they are connected to a photo detector (for example, a solar cell) 708. The photo detector 708 receives light of a light emission diode 709, turn 706 and 707 on or off, and supplies power supplied via TIP and RING to the circuit on the right of the switches. The light emission diode 709 is controlled in light emission by the switch circuit comprising a transistor 710 and resistors 711 and 712. The control signal of this switch is POWER ON. Diodes 713, 714, 715, and 716 constitute a bridge and have a function for keeping the current direction constant regardless of the direction of the DC voltage applied to TIP and RING. The circuit comprising resistors 717 and 718, a capacity 719, transistors 720 and 721, a resistor 722, and an NMOS transistor 723 is a DC loop circuit, and when the control output terminal GPO of the I-AFE 500 goes high, the NMOS transistor turns on, and Darlington transistor circuits 720 and 721 operate according to the bias of the resistors 717 and 718 and flows a loop (looping) current balanced with the feedback resistor 722. The circuit comprising a resistor 724 and a 18-V Zener diode 725 is a protection circuit for preventing application of an excessive voltage to a 3-terminal regulator 726 and the I-AFE 500. A capacity 727 is a smoothing capacitor and capacities 728 and 740 are an output circuit of I-AFE and a signal connection capacitor.

When sending by the modem, the POWER ON signal is generated first, and the NMOS switches 706 and 707 are turned on, and the 3-terminal regulator 726 is connected to the line, and a current is supplied to the AFE, and the GPO is put on the high level from the TXD via the CONTR next, and the NMOS switch 723 is turned on, and the loop current is conducted so as to notify the switchboard of the office that the modem is connected to the line. Next, the modem sends a dial signal to the I-AFE 500 via the capacities 728 and 440 and waits until the switchboard connects the remote modem. The connected remote modem generates the normal modem signal, so that the modems mutually perform communication via the AFE hereafter. The capacity 729 and Zener diodes 730 and 731 are a sensitivity adjustment circuit for rejecting a response to an incoming signal at lower than the fixed voltage, and the resistor 732 is a current limit resistor of the diode 733 or the light emission diode 734, and the photo transistor 735 detects emitted light and notifies the modem 700 of it as a RING DETECT signal when an incoming signal flows in the light emission diode 734 through a load of the resistor 736. During reception of the modem, this signal is notified to the modem, and the POWER ON terminal responds to it, and the NMOS switches 706, 707, and 723 are turned on, and the loop current is conducted, and the power is turned on, and a modem response signal is repeated via the capacities 728 and 740. Hereafter, the modem signal is sent and received almost in the same way as that during sending.

According to the embodiments explained in Figs. 20 to 22, the following characteristics and effects can be obtained. The first characteristic is that the analog I/O side circuit including the circuit of individual parts on the left of the arrangement of insulating couplers of the I-AFE all insulates the digital I/O circuit on the right. Conventionally, the circuit is insulated by an insulating transformer and if anything, located on the right. The transformer can be deleted by the I-AFE in this embodiment and a miniature modem device can be constructed. The second characteristic is that power is supplied to the analog I/O side circuit of the I-AFE from the office and the power is supplied. Therefore, it is not necessary to supply the power of the analog I/O device from the modem device side and it contributes to reduction in the whole power consumption. The third characteristic is that the switches of the individual part portion are divided into the POWER ON switches 706 and 707 and the loop current switch 723. By doing this, power is supplied to the AFE without conducting the loop current at start of line connection and for example, it can be used for sending and receiving a signal between the switchboard and the modem such as notification of the originating number.

The insertion position of the insulating coupler in the AFE may be changed from that shown in Fig. 20. For example, the insulating couplers are arranged between the ADC and DAC and the decimeter filter and interpolator. The data transfer speed in this portion is fast such as 2 bit/w × 2 Msps or 6 bit/w × 2 Msps, so that the insulating couplers are installed in parallel. Therefore, the delay time due to the transfer operation can be almost ignored. As a result, for example, when an echo canceller or the terminal is to be processed by the in-DSP, there is an advantage that the processing performance is little restricted compared with the case shown in Fig. 20.

As an ON-OFF control circuit for the NMOS switches 706 and 707, a charge pump circuit may be used. The charge pump circuit comprises a plurality of capacities, a driver for supplying electric charge to the capacities, and a plurality of switches for controlling electric charge supply and is a circuit such that by repeating an operation at high speed that electric charge is supplied to a capacity by the driver and switch and the electric charge is moved to another capacity by changing the switch, another capacity obtains a voltage. When this charge pump circuit is applied to the circuit shown in Fig. 22, by adding the insulating barrier of the present invention, an inverter driver, and a switching diode, an ON-OFF control circuit can comprise only a silicon semiconductor device. Therefore, the ON-OFF control circuit can be integrated on the SOI substrate together with the I-AFE, so that the number of parts of the modem device can be decreased furthermore.

An application example of insulating couplers to the AFE is described above. According to this embodiment, as mentioned above, although 8 to 13 insulating couplers are used for the I-AFE, there is an effect that the area of chip layout can be made smaller such as less than 10% of the total area of the AFE. Needless to say, a constitution may be used that by operating and using insulating couplers at high speed of a multiple of the number of rows, the number of insulating couplers to be used is decreased. In either way, the effect of remarkable miniaturization is kept unchanged compared with a case that an insulating coupler using an insulating transformer and external highly dielectric capacitor is used. Since this integrated circuit is suited to mass production, it is also characteristic that the economical efficiency can be improved. Particularly, a recent high speed modem requires high performance of a transformer, hence an expensive material such as permalloy is used as a core material, so that 2 or 3 fold part expenses are required compared with a case that an inexpensive silicon steel plate is used. In this meaning, when this embodiment is applied, in the high-speed modem field, there is an effect that the present invention greatly contributes to not only miniaturization but also improvement of economical efficiency. As mentioned above, according to this embodiment, there is an effect that a very miniature on-chip highly dielectric capacitor or a very miniature monolithic insulating coupler can be realized, and a miniature AFE can be realized by use of it, and a miniature and economical modem device can be realized by use of the AFE.

Fig. 23 is a structural diagram of an embodiment of a communication system using a combination of a modem device and a host (PC). In Fig. 23(a), numeral 810 indicates, for example, the portion of the discrete circuit shown in Fig. 22 and it is a DAA (direct access arrangement) means including a protection device, connection switch, DC loop circuit, DC loop switch (DC loop), and call signal detection circuit. Numeral 811 indicates insulating, filtering, AD, and DA means like the I-AFE, 812 a modulation and demodulation means like the DSP, and 813 a transmission control means comprising an MPU, memory, and software and a modem section 800 comprises these units. Numeral 801 indicates an application control means such as a PC and it is a whole control CPU of the internal host CPU of the WS, PC, and PDA, the dedicated DSP, or the cluster modem and it is called a PC basic section or host here.

As an application control means, in addition to the aforementioned, there are various digital devices handling a digital signal and terminal devices available.

Fig. 23(a) shows an embodiment using I-AFE in the constitution that the signal process is hierarchically divided among the DSP, MPU, and PC, so to speak, the conventional type modem constitution, and the expensive and large insulating transformer which is conventionally installed in the DAA is deleted by the I-AFE, and the number of photocouplers is decreased, and the embodiment contributes to miniaturization and improvement of economical efficiency. The monolithic insulating couplers are built in the AFE. However, they may be structured so as to combine with another part as required. The I-AFE and DSP may be integrated.

Fig. 23(b) is a structural diagram of an embodiment of a soft modem device using I-AFE. In Fig. 23(b), each same numeral as that shown in Fig. 23(a) indicates the same name, and numeral 822 indicates an interface (I/F) means for connecting the modulation and demodulation means 811 and the application control means 803 and it includes a buffer memory about 0.5 MB long and another control logic circuit. The characteristic of this constitution is that by processing the modulation and demodulation means and transmission control means in a batch by the host CPU, the hardware of the modulation and demodulation means (DSP) 812 and the transmission control means (MPU) 813 is reduced and substantial miniaturization and improvement of economical efficiency of the modem device are realized. In this constitution, since the hardware of the modem section is made smaller, the effect of miniaturization and improvement of economical efficiency by the monolithic insulating couplers is seen conspicuously large. Even in this constitution, the monolithic insulating couplers may be combined with other than the AFE. The I/F means has a main function for temporarily storing AD and DA conversion data and if it is integrated with the I-AFE, the modem device can be miniaturized more. On the other hand, the I/F means 822 may be integrated with the application control means 803. In the note PC, PDA, and cluster type modem device in which the modem section and the PC section are integrated, the classification of the modem section is originally thin and the arrangement may be decided at the request of others.

As mentioned above, in a modem device and a communication system using a modem, it is clear that by using I-AFE, that is, monolithic insulating couplers, the insulating transformer can be deleted, and the number of photocouplers can be decreased, and miniaturization and improvement of economical efficiency of the equipment can be realized.

As a boundary between the modem section and the PC section, in the respect of standardization, there are a parallel bus like the PCI standard and a serial bus like the IEEE1394 or USB, and the establishment of a constitution suited to these buses is effective in spreading of application of the present invention, and an effect of miniaturization and improvement of economical efficiency is produced.

Fig. 24 is a system block diagram of still another embodiment. In Fig. 24, numeral 850 indicates a controller, 860 to 862 insulating couplers, 851 a transceiver, and 852 a power regulator and these units constitute one station 840. Numeral 841 indicates another station whose inside is not disclosed and a plurality of other stations not shown in the drawing are assumed. These stations are connected to a network bus 870 including a signal bus 871, a power bus 872, a control signal bus not shown in the drawing, and a power supply 880 respectively in parallel. In these stations, the controller and application circuit (controller side circuit portion) 850, the transceiver 851, and the power regulator 852 (network side circuit part) are insulated and separated by the insulating couplers 860 to 862 and the transceiver 851 connects the controller and application circuit 850 and the signal bus 871 via the insulating couplers 860 to 862 so that the network side circuit portion supplies power from the power bus 872. The insulating couplers connect the controller and application circuit 850 and the transceiver 851 and controls the standby operation of the transceiver 851. To execute communication between a certain station 840 and another station, when the station to be started releases the standby of the transceiver and monitors a receiving signal R, it becomes aware of that the signal bus 871 is free and sends a sending signal T addressed to another station. Another station releases the standby of the transceiver sometimes, monitors the receiving signal R, monitors the status of a control signal of a network bus not shown in the drawing, and checks whether it is a signal addressed to the own station. If it is, the station controls so as to receive the signal next. This control sequence is an example and can be changed. What may be safely said commonly to those devices connected to the network is insulation and separation of the network and station. Namely, for the network and terminal, in the same way as with the modem, even if an abnormal voltage is generated due to an abnormal situation in others, it is essential to prevent its diffusion and an expensive transformer and photocoupler are conventionally used as this insulation means. Therefore, a problem of miniaturization and improvement of economical efficiency arises.

When monolithic insulating couplers are applied like this embodiment, there is an advantage that not only miniaturization and improvement of economical efficiency can be realized as a system but also by realizing an IC by appropriate combination with the controller circuit and transceiver circuit, miniaturization and improvement of economical efficiency also can be realized as a circuit.

As explained in this embodiment, according to the present invention, there is an advantage that miniaturization and improvement of economical efficiency can be realized not only for the modem device but also for the network device.

In these examples, an example that power is supplied from the network is explained. However, if another communication system or device is insulated from the application circuit side and power is supplied, the present invention also can be applied to it. In this case, the effect of improvement of economical efficiency may be slightly reduced, but the present invention may be effective including an advantage of miniaturization.

Fig. 25 is a layout diagram of insulating couplers corresponding to Fig. 16 when T-shaped or Y-shaped connection of an insulator is permitted as shown in Fig. 15(c) instead of drawing with a single stroke of the pen. In Fig. 25, numerals 201 to 207 indicate the same names as those shown in Fig. 16. An insulating band 206' has Y-shaped joints at the six circled portions and one input circle area, two insulating barriers, and one output circuit area are insulated and separated by the joints respectively. When the insulator 206' is arranged in this way, for wiring between the input circuit and the insulating barriers and between the insulating barriers and the output circuit as shown in Fig. 16, there is an effect that there is no need to consider insulation between the area among the areas requiring to consider high insulation and the intermediate electrode area of the insulating barriers.

Fig. 26 is a block diagram of a digital insulating coupler of an embodiment of the present invention.

Firstly, the primary circuit area, insulating barrier, and secondary circuit area are insulated and separated on one semiconductor substrate. Pls_in and Pls_out indicate an input pulse signal and output pulse signal of the insulating barrier respectively. Numeral 901 indicates a differential amplifier circuit for generating a complementary pulse signal on the basis of the input pulse signal Pls_in. Numeral 902 indicates a capacitive insulating barrier for coupling a complementary pulse signal driven by the differential amplifier circuit 901 to the secondary side with a high dielectric strength. Numeral 903 indicates a differential circuit for differentiating a signal coupled from the primary side by the insulating barrier 902. Numeral 904 indicates a transition detection circuit for inputting a pair of signals differentiated by the differential circuit 903 and detecting and amplifying each edge of the pair of differential signals. Numeral 905 indicates a pulse regeneration (demodulation) means for regenerating (demodulation) the input pulse signal Pls_in using an output signal of the transition detection circuit 904 and outputting the output pulse signal Pls_out.

In this embodiment, by structuring all the circuits including the insulating barrier 902 inside the monolithic IC, insulating and separating the primary circuit area, insulating barrier, and secondary circuit area, and forming them on the same semiconductor substrate, miniaturization of the digital insulating coupler can be realized. In this embodiment, a digital insulating coupler is used because a signal is transferred from the primary side to the secondary side by a digital signal. However, by installing an AD conversion circuit and a DA conversion circuit in the input section and output section of this embodiment, an analog insulating coupler can be easily realized.

Fig. 27 is a concrete circuit diagram of a digital insulating coupler of an embodiment of the present invention.

Fig. 28 is a drawing showing the operation waveform of the circuit shown in Fig. 27. The operation of the circuit of a concrete embodiment of the digital insulating coupler of the present invention will be explained by referring to Figs. 27 and 28.

In Fig. 27, numeral 910 indicates a differential amplifier circuit for inputting an input pulse signal Pls_in and outputting a complementary paired pulse signal Pls_1. The first stage comprises a CMOS differential amplifier and outputs the comparison result of the reference voltage Vref with the input pulse signal Pls_in as a complementary signal. The driver at the next stage (drive stage) comprises a CMOS inverter and outputs the complementary paired pulse signal (output of the differential amplifier circuit) Pls_1 having an amplitude almost equal to that of the supply voltage by it. Numeral 920 indicates a capacitive insulating barrier having dielectric strength between the primary side and the secondary side. At each terminal on the primary side and secondary side, a reverse connection diode is provided between the terminal and the high potential power supply (VDD1 or VDD2) and between the terminal and the low potential power supply (VSS1 or VSS2) respectively as a means for absorbing a surge due to noise. The insulating barrier itself comprises, as mentioned above, a highly dielectric capacity (capacitor) formed within the same semiconductor integration device. Numeral 930 indicates a load resistor forming a differentiation means provided at the secondary terminal so as to output a differential waveform by the capacitive connection from the primary side. The load resistor is provided so as to short-circuit between the high potential power supply VDD2 and the secondary terminal. Therefore, the secondary terminal is stationarily fixed at the potential of the high potential power supply VDD2 and when the primary terminal shifts from the "Hi" level to the "Lo" level, a spike-shaped differential waveform is generated on the "Lo" level side. Numeral 940 indicates a transition detection circuit for inputting a paired differential signal Pls_3, detecting both of the leading edge of the input pulse signal Pls_in and the trailing edge, and generating a one-shot pulse Pls_4. The input stage uses a pair of CMOS differential amplifiers for reversely connecting the paired differential signal Pls_3 mutually as input signals. Each of the pair of CMOS differential amplifiers outputs a single end signal. An input signal of the CMOS differential amplifiers is stationarily on the same level, so that the load comprises a PMOS current mirror.

Only when a potential difference is generated in the paired differential signal Pls_3 (the input pulse signal Pls_in shifts), the CMOS differential amplifiers output a differential output (each CMOS differential amplifier outputs a single end output) Pls_40 for the potential difference. Therefore, the outputs Pls_40 of the pair of CMOS differential amplifiers are stationarily on the same level. As a result, it is necessary to design so that the PMOS input level conversion circuit at the next stage does not output the intermediate level (level in the neighborhood of the logical threshold value of the gate at the nest stage) when the input signal is on the same level. For example, in this embodiment, since the pulse reproducing (demodulation) circuit comprising a flip-flop at the next stage receives at the CMOS NAND gate, the MOS gate width of the level conversion circuit is designed so as to output the "Hi" level when Pls_40 is on the same level. Therefore, the level conversion circuit operates so that the ratio of the gate width Wp1 of PMOS1 on the input side to the gate width Wn1 of NMOS1 will not be equal to the ratio of the gate width Wp2 of PMOS2 on the output side to the gate width Wn2 of NMOS2. Both outputs of the transition detection circuit 940 are stationarily on the "Hi" level and the transition detection circuit 940 generates a one-shot pulse on the "Lo" level in one output during rising and a one-shot pulse on the "Lo" level in the other output during falling in correspondence with transition of the input pulse signal Pls_in. Numeral 950 indicates a pulse reproducing circuit comprising a flip-flop for reproducing the input pulse signal Pls_in on the secondary side by the output signal Pls_4 of the transition detection circuit and outputting the output pulse Pls_out. This embodiment is an example that a flip-flop comprising two sets of CMOS-NAND gates and a driver of a set of CMOS inverter constitute a pulse reproducing circuit. A means for resetting the flip-flop may be installed as required.

In the insulating coupler of this embodiment, the secondary terminal is short-circuited to the high potential power supply VDD2 via the load resistor, so that the primary falling operation is important. Therefore, in the CMOS inverter at the output stage of the differential amplifier circuit 910, for example, when the logical threshold value VLT is set less than (VDD-VSS)/2 like the CMOS inverter, the falling transition time is shortened and variations of the timing can be suppressed. In the explanation of this embodiment, the delay time of the circuit is not mentioned. However, the delay time of the circuit is sufficiently short compared with the pulse width of the input pulse signal relating to the explanation of operation and although there is a delay time of the circuit, it is not particularly taken into account.

According to this embodiment, since the components of the circuit are all installed within the same semiconductor integration circuit device, miniaturization, improvement of economical efficiency, and high reliability can be realized. In this embodiment, the circuits before and after the insulating barrier comprise differential circuits, so that the common mode noise resistance can be increased and the SN ratio can be increased. When the circuit behind the insulating barrier comprises a pair of differential amplifiers, an amplifier circuit excellent in CMRR can be realized. CMRR is an abbreviation for Common Mode Rejection Rate and means the so-called in-phase signal removal ratio. Furthermore, the circuit comprises a simple CMOS gate, so that there is an effect that it can sufficiently respond to a low voltage of less than 5 V (down to about 1.8 V) and the power consumption can be suppressed.

A substrate of an SOI wafer is generally used in the state that it is originally grounded. However, when the substrate is set at a floating potential, buried insulating layers are doubly installed between the input circuit and the output circuit and more highly dielectric strength can be obtained. However, on the other hand, the following problem is imposed.

Fig. 29 shows a means for reducing the effect of crosstalk between some insulating couplers which poses a problem when a plurality of insulating couplers are mounted on the sane SOI semiconductor substrate and the substrate is set at a floating potential.

In Fig. 29, [1] IN1 and [2] IN1 indicate signal input terminals of insulating couplers 961 and 962 and [1] OUT2 and [2] OUT2 indicate signal output terminals of isolators 961 and 962. Terminals POWER1 and POWER2 are power terminals for supplying power to the primary circuit and secondary circuit of the insulating couplers respectively and connected to a substrate 965 of an SOI wafer by capacities 963 and 964 respectively. Capacities 966 and 967 are stray capacities existing between the insulating couplers 961 and 962 and the substrate 965 and the greater part of them is a coupling capacity between the insulating barriers and the substrate. In this constitution, when the first insulating coupler 961 operates, a leaked signal component is generated in the substrate via the capacity 966 and there is a fear that it may affect the operation of the second insulating coupler by the capacity 967 and the coupling capacity between the secondary circuit not shown in the drawing and the substrate. However, in this case, since the capacities 963 and 964 are connected, the noise generated in the substrate is absorbed in the low-impedance power supply via these capacities. Even if these insulating couplers are reverse, the same may be said. When the capacities 966 and 967 are 1 pF and the capacities 963 and 984 are 100 pF to 1000 pF, a remarkable effect can be obtained. In this embodiment, the capacities 963 and 964 are explained as different parts from the semiconductor. However, when the circuit area other than the insulating couplers is large like I-AFE and the respective coupling capacities between the primary circuit and secondary circuit and the substrate are large as a result, addition of a capacity is not necessary. Even when a plurality of insulating couplers face in different directions, the same action effect can be obtained.

As explained above, according to this embodiment, there is an effect that when the substrate is at a floating potential, if the coupling capacities between the primary circuit and secondary circuit and the substrate are made larger or a large capacity is connected between the substrate and the power supply outside the semiconductor, the effect of crosstalk can be reduced.

Most highly dielectric performance when the substrate is set at a floating potential can be obtained when the coupling capacity between the substrate and the input circuit is equal to the coupling capacity between the substrate and the output circuit. If the capacities cannot be well-balanced under some conditions, the aforementioned external capacity can be used in addition to the crosstalk countermeasure. As this capacity, a surge absorption device may be used. In this case, in addition to the aforementioned effect, a surge suppression effect is obtained.

### INDUSTRIAL FIELD OF APPLICATIONS

According to the present invention, a miniature insulating coupler and modem interface circuit of high performance and a miniature and economical modem device can be realized.

## Claims

1. A modem device for modulating and demodulating a signal between application control means and a line, wherein said device has an insulating coupler for separating said application control means and said line by a capacitive insulating barrier and at least said capacitive insulating barrier is formed on an SOI substrate.

2. A modem device according to Claim 1, wherein said device has a line side circuit for inputting and outputting a signal between said line and a line connected to said line, a DSP for modulating or demodulating an I/O signal, and an analog-digital interface between said line side circuit and said DSP.

3. A modem device according to Claim 2, wherein said insulating coupler is connected between said line side circuit and said analog-digital interface and said line side circuit and said insulating coupler are integrated on said SOI substrate.

4. A modem device according to Claim 2, wherein said insulating coupler is connected between said analog-digital interface and said DSP and said line side circuit, said analog-digital interface, and said insulating coupler are integrated on said SOI substrate.

5. A modem device according to Claim 2, wherein a charge pump circuit using said capacitive insulating barrier drives a CMOS switch and controls said line side circuit.

6. A modem device according to Claim 2, wherein a termination detection signal path is controlled by turning a DC loop control signal on.

7. A modem device according to Claim 2, wherein a control signal and DA conversion or an internal state signal and an AD signal are multiplexed.

8. A modem device according to Claim 2, wherein a sound band signal is compressed.

9. A modem device according to Claim 2, wherein the operation timings of said line side circuit, said analog-digital interface, and said insulating coupler are synchronized with the operation clock of said DSP.

10. A modem device according to Claim 2, wherein a control signal is changed to an error correction code and then a signal is transmitted via said insulating coupler.

11. A modem device for modulating and demodulating a signal between application control means and a line, wherein said device has a line side circuit for inputting and outputting a signal between said line and a line connected to said line, a DSP for modulating or demodulating an I/O signal, an analog-digital interface between said line side circuit and said DSP, and an insulating coupler for separating said application control means and said line and the operation timings of said line side circuit, said analog-digital interface, and said insulating coupler are synchronized with the operation clock of said DSP.

12. A modem device according to Claim 10, wherein a carrier clock of an insulating coupler for receiving a modem signal is reproduced and used from a clock for a DC loop control signal path.

13. A modem device for modulating and demodulating a signal between application control means and a line, wherein said device has a line side circuit for inputting and outputting a signal between said line and a line connected to said line, a DSP for modulating or demodulating an I/O signal, an analog-digital interface between said line side circuit and said DSP, and an insulating coupler for separating said application control means and said line and a control signal is changed to an error correction code and then a signal is transmitted via said insulating coupler.

14. A system comprising application control means and a modem device for modulating and demodulating a signal between said application control means and a line, wherein said modem device has an insulating coupler for separating said application control means and said line by a capacitive insulating barrier and at least said capacitive insulating barrier is formed on an SOI substrate.

15. An integrated circuit used in a modem device for modulating and demodulating a signal between application control means and a line, wherein a line side circuit for inputting and outputting a signal between said line and a line connected to said line and a capacitive insulating barrier which is connected to said line side circuit and insulates and separates between said line and said application control means are formed on the same SOI substrate.

16. An integrated circuit used in a modem device for modulating and demodulating a signal between application control means and a line, wherein an analog-digital interface and a capacitive insulating barrier which is connected to said analog-digital interface and insulates and separates between said line and said application control means are formed on the same SOI substrate.

17. A capacitive insulating barrier wherein a trench reaching a buried insulating layer is formed in an SOI substrate, and an insulating band is formed by filling said trench with an insulator, and a capacity is formed by enclosing a silicon area on said SOI substrate by said insulating band.

18. A capacitive insulating barrier according to Claim 17, wherein a series capacity is formed by a multiple-insulating band.

19. A capacitive insulating barrier according to Claim 17, wherein a multiple inter-wiring-layer film is formed on the surface of said SOI substrate.

20. An insulating coupler wherein a capacitive insulating barrier that a trench reaching a buried insulating layer is formed, and an insulating band is formed by filling said trench with an insulator, and a capacity is formed by enclosing a silicon area on an SOI wafer by said insulating band, an input circuit, and an output circuit are formed on said SOI wafer, and these are enclosed by said insulating band into areas, and said areas are mutually insulated, and between said input circuit and one electrode of said insulating barrier and between the other electrode of said capacitive insulating barrier and said output circuit are wired.

21. An insulating coupler according to Claim 20, wherein said input circuit area and said output circuit area are arranged with said insulating barrier between on said SOI substrate.

22. An insulating coupler according to Claim 20, wherein said area forming said insulating coupler is enclosed by said insulating band.

23. An insulating coupler according to Claim 20, wherein the inside of said circuit area is separated into a circuit area directly in contact with the power supply and an area directly in contact with the grounding terminal by said insulating band.

24. An insulating coupler according to Claim 20, wherein said coupler has a plurality of capacitive insulating barriers and the intermediate area of said plurality of insulating barriers is grounded.

25. An insulating coupler according to Claim 20, wherein a multiple-insulating trench is arranged in the outermost diameter zone on a chip.

26. An insulating coupler according to Claim 20, wherein a protection circuit having a non-linear device is arranged between said insulating barrier and said input circuit and output circuit.

27. An insulating coupler according to Claim 20, wherein said input circuit or said output circuit is a CMOS circuit and the area of said CMOS circuit is separated into a PMOS area and an NMOS area by said insulating band.

28. An insulating coupler according to Claim 20, wherein said input circuit area, said output circuit area, and said capacitive insulating barrier are enclosed by insulating bands and the multiplexing rate of insulating bands of said circuit areas is higher at least one level than the multiplexing rate of insulating bands of said capacitive insulating barrier.

29. An insulating coupler comprising an input circuit, an output circuit, and a capacitive insulating barrier for insulating and separating said input circuit and said output circuit, wherein at least said capacitive insulating barrier is formed on an SOI substrate.

30. An insulating coupler wherein at least an input circuit, an output circuit, and a capacitive insulating barrier for insulating and separating said input circuit and said output circuit are integrated on the same semiconductor substrate and a pre-amplifier is arranged before a detection circuit for detecting an output signal of said capacitive insulating barrier.

31. An insulating coupler wherein a capacitive insulating barrier that a trench reaching a buried insulating layer is formed, and an insulating band is formed by filling said trench with an insulator, and a capacity is formed by enclosing a silicon area on an SOI wafer by said insulating band, an input circuit, and an output circuit are formed on said SOI wafer and insulating bands for insulating and separating the area of said capacitive insulating barrier, the area of said input circuit, and the area of said output circuit have T-shaped or Y-shaped contact portions.

32. An insulating coupler wherein a first circuit area which is the primary side and a second circuit area which is the secondary side which are mutually insulated and separated are formed on the same semiconductor substrate and said coupler has a differential amplifier circuit for inputting a first pulse signal which is a digital signal and outputting a second paired pulse signal which is a complementary signal in said first circuit area, insulation and separation means having a paired capacitor for electrically separating said second paired pulse signal and connecting it from the primary side to the secondary side on said semiconductor substrate, a pair of differential means for generating a third paired pulse signal having a differential waveform corresponding to the transition time of said second paired pulse signal by connection from the primary side in said second circuit area, and pulse demodulation means for using a third paired pulse signal as an input signal and reproducing said first pulse signal which is a digital signal from the edge timing of said paired differential signal obtained by said differential means in said second circuit area.

33. An insulating coupler according to Claim 32, wherein said differential means comprises a resistor device installed between the primary terminal of said insulation and separation means and the high potential power supply on the secondary side and the stationary level is the high potential power level.

34. An insulating coupler according to Claim 33, wherein the logical threshold value at the output stage of said first differential amplifier circuit for inputting said first pulse signal and outputting said paired pulse signal which is a complementary signal is on a level lower than 1/2 of the supply voltage at said output stage.

35. An insulating coupler according to Claim 32, wherein said differential amplifier circuit and said pulse demodulation means comprise CMOS.

36. An insulating coupler according to Claim 32, wherein the first stage of said pulse demodulation means comprises a pair of differential circuits.

37. An insulating coupler comprising a capacitive area having a band-shaped area in which a trench reaching a buried insulating layer is filled with an insulator as a dielectric, an input circuit area including a capacity drive circuit, and an output circuit area including a via-capacity signal detection circuit on an SOI wafer, wherein the substrate potential of said SOI wafer is a floating potential.

38. A monolithic insulating coupler comprising a capacitive area having a band-shaped area in which a trench reaching a buried insulating layer is filled with an insulator as a dielectric, an input circuit area including a capacity drive circuit, and an output circuit area including a via-capacity signal detection circuit on an SOI wafer, wherein the substrate potential of said SOI wafer is a floating potential and an external capacitor is connected between said substrate and the power supply or ground.

39. An AFE integrated circuit wherein an AFE (analog front end) circuit which is an analog-digital interface and an insulating coupler having a capacitive insulating barrier for insulating and separating between the analog I/O circuit and the digital I/O circuit of said AFE circuit are formed on the same SOI substrate.

40. An AFE integrated circuit according to Claim 39, wherein the AD conversion circuit and DA conversion circuit of said AFE circuit are of an oversample system and said insulating coupler is inserted between the oversample AD circuit and the AD digital signal processing circuit and between the oversample DA circuit and the DA digital signal processing circuit.

41. An AFE integrated circuit according to Claim 39, wherein an insulating coupler for timing synchronization is arranged between said analog I/O side circuit and said digital I/O side circuit.

42. An AFE integrated circuit according to Claim 40, wherein a delay or advance of the ADC sample timing caused by the modem signal process is notified to said AFE circuit as a minute change of the oversample timing clock frequency and said AFE circuit generates an internal timing by PLL(phase locked loop)-synchronizing the internal clock with it.

43. An AFE integrated circuit comprising an AFE (analog front end) circuit which is an analog-digital interface and an insulating coupler having a capacitive insulating barrier for insulating and separating between the analog I/O circuit and the digital I/O circuit of said AFE circuit, wherein a set of register and insulating coupler respectively installed on said analog I/O circuit side and said digital I/O circuit side are set as control register means.

44. An AFE integrated circuit comprising an AFE (analog front end) circuit which is an analog-digital interface and an insulating coupler having a capacitive insulating barrier for insulating and separating between the analog I/O circuit and the digital I/O circuit of said AFE circuit, wherein a set of register and monolithic insulating coupler respectively installed on said analog I/O circuit side and said digital I/O circuit side are set as general purpose I/O means.

45. A modem device comprising DAA means, AFE (analog front end) means, modulation and demodulation means, transmission control means, and insulation means between a line and application control means, wherein said insulation means is an insulating coupler having a capacitive insulating barrier.

46. A modem device comprising DAA means, AFE (analog front end) means, interface means, and insulation means between a line and application control means, wherein said insulation means is an insulating coupler having a capacitive insulating barrier.

47. A modem device according to Claim 45 or 46, wherein said AFE means contains said modulation and demodulation means.

48. A modem device according to Claim 45 or 46, wherein said AFE means contains a plurality of insulating couplers and said modulation and demodulation means.

49. A modem device according to claim 45 or 46, wherein as serial bus connection means between the modem portion and said application control means, interface means comprising serial bus connection hardware and serial bus transmission software is used for both said modem portion and said application control means.

50. A system comprising a modem device according to Claim 45 or 46 and application control means connected to said modem device.

51. A communication device comprising at least a plurality of stations including network control and application circuit means, transceiver means, insulating means between said network control means, said application circuit means, and said transceiver means, and power regulator means and network means for connecting between each station, wherein said insulation means is an insulating coupler having a capacitive insulating barrier.

52. A communication device according to Claim 51, wherein said insulating coupler and said network control and application circuit means or said transceiver means or both of them are integrated to one semiconductor chip.
